# EUROPEAN PATENT APPLICATION

(11) **EP 1 248 219 A2**
(43) Date of publication of application: **09.10.2002**
(21) Application number: 02006649.4
(22) Date of filing: 26.03.2002
(51) Int. Cl.: G06F 17/60, G06F 3/12, H04N 1/00, G06K 15/00

(54) **Method and apparatus for calculating the cost of printing a digital image**

(30) Priority: 04.04.2001 JP 2001105943; 04.04.2001 JP 2001105944; 30.05.2001 JP 2001162281
(71) Applicant: SEIKO EPSON CORPORATION, Shinjuku-ku, Tokyo 163-0811 (JP)
(72) Inventor: Minowa, Yoshiki, Nagano-ken 392-8502 (JP); Akaiwa, Masao, Nagano-ken 392-8502 (JP)
(74) Representative: Hoffmann, Eckart, Dipl.-Ing.

(57) **Abstract**

There are provided a printing cost-calculating method, a printing cost-calculating apparatus, a printer driver, a printing apparatus, a printing system, a printing cost-calculating system and printed matter-issuing system, which are capable of efficiently and accurately calculating a printing cost required for preparing printed matter by using at least one coloring material, based on a digital image represented by discrete numerical values. The amount of ink to be ejected for preparation of a label is calculated based on a digital image. Then, printing cost is calculated based on the calculated amount of ink to be ejected.

## Description

### BACKGROUND OF THE INVENTION

### Field of the Invention

This invention relates to a printing cost-calculating method and apparatus, a printer driver, a printing apparatus, a printing system, a printing cost-calculating system, and a printed matter-issuing system, which are capable of calculating a printing cost required for preparing printed matter by using at least one coloring material, based on a digital image represented by discrete numerical values.

### Prior Art

Conventionally, a printing company having received a request for preparing printed matter calculates a printing fee including an initial cost required for preparing the printed matter, based on an artwork cost and a plate cost. For example, assuming that 2-color printing costs ¥50,000 for two sheets of artwork required therefor, and 3-color printing ¥70,000 for three sheets of artwork required therefor (in these cases, the artwork cost and the plate cost include a material cost, an ink cost, and the like), and that the number of print copies of the printed matter to be prepared is 5,000, a printing cost per copy of 2-color printing is ¥10, and a printing cost per copy of 3-color printing is ¥14. As described above, with an increase in number of colors for use in printing, the number of required sheets of artwork increases, which causes an increase in printing cost. On the other hand, the printing cost per copy is reduced with an increase in the number of copies.

Recently, so-called "digital printing", which is performed not by using artwork, but based on digital data represented by discrete numerical values, has been coming into wide use. Actually, however, the application of this technology is still limited to some particular fields because of its high running cost. The running cost is determined mainly by the amount of consumption of coloring materials required for printing. However, since the amount of consumption of coloring materials is proportional to the number of print copies, a printing cost per copy is not influenced by the number of copies. Therefore, when the number of print copies is small, "digital printing" is more advantageous in terms of cost than the conventional printing using artwork. This means that if the limit of the number of print copies within which "digital printing" is more advantageous in terms of cost can be determined, it will be useful in selecting a printing method. However, the cost merit of "digital printing" changes considerably depending on image quality (resolution) and printing density, which makes it difficult to accurately estimate a printing cost.

### SUMMARY OF THE INVENTION

It is an object of the invention to provide a printing cost-calculating method and apparatus, a printer driver, a printing apparatus, a printing system, a printing cost-calculating system and printed matter-issuing system, which are capable of efficiently calculating accurate printing cost required for preparing printed matter by using coloring materials, based on a digital image represented by discrete numerical values.

To attain the above object, according to a first aspect of the invention, there is provided a printing cost-calculating method for calculating a printing cost required for preparing printed matter by using at least one coloring material, based on a digital image represented by discrete numerical data,
the method comprising the steps of:
calculating an amount of the at least one coloring material to be consumed for preparation of the printed matter, based on the digital image; and
calculating the printing cost based on the amount of the at least one coloring material calculated in the step of calculating the amount of the at least one coloring material to be consumed.

Further, according to a second aspect of the invention, there is provided a printing cost-calculating apparatus for calculating a printing cost required for preparing printed matter by using at least one coloring material, based on a digital image represented by discrete numerical data,
the printing cost-calculating apparatus comprising:
first calculation means for calculating an amount of the at least one coloring material to be consumed for preparation of the printed matter, based on the digital image; and
second calculation means for calculating the printing cost based on the amount of the at least one coloring material calculated by the first calculation means.

According to these method and apparatus, the printing cost is calculated based on the amount of at least one coloring material to be consumed for preparation of printed matter, so that it is possible to estimate accurate printing cost when printed matter is prepared by using the at least one coloring material based on a digital image represented by discrete numerical data. More specifically, since printing performed based on a digital image does not need any use of artwork, printing cost required for the printing is indifferent to the number of colors, but depends on the amount of coloring materials actually used. Therefore, the method of the invention, in which the printing cost is calculated based on the amount of at least one printing material to be actually consumed for the preparation, is capable of calculating the printing cost accurately and efficiently.

Preferably, the step of calculating the amount of the at least one coloring material to be consumed includes carrying out pseudo-gradation processing on the digital image by a dither method, and calculating gradation-specific amounts of the at least one coloring material.

Similarly, it is preferable that the printing cost-calculating apparatus further comprises pseudo gradation means for carrying out pseudo-gradation processing on the digital image by a dither method, and the first calculation means includes gradation-specific amounts calculation means for calculating gradation-specific amounts of the at least one coloring material to be consumed.

According to these preferred embodiments, pseudo-gradation processing is carried out on the digital image by the dither method generally used as a method of gradation processing, and gradation-specific amounts of the at least one coloring material are calculated, whereby the amount of the at least one coloring material to be consumed for preparation of the printed matter can be calculated based on the gradation-specific amounts of the at least one coloring material (i.e. by calculating a total of the gradation specific amounts). In short, it is possible to calculate the amount of the at least one coloring material to be actually consumed for preparation of the printed matter, by data processing which is of a general type and easy to employ.

More preferably, the gradation-specific amounts of the at least one coloring material are calculated based on numerical values which represent respective gradations.

Similarly, it is more preferable that the gradation-specific amounts calculation means calculates the gradation-specific amounts of the at least one coloring material, based on numerical values which express respective gradations set by the pseudo gradation means.

Preferably, the step of calculating the amount of the at least one coloring material to be consumed includes calculating color-specific amounts of the at least one coloring material for respective colors thereof, and the step of calculating the printing cost includes calculating the printing cost based on the color-specific amounts of the at least one coloring material calculated for the respective colors thereof and prices of unit amounts of the at least one coloring material set for the respective colors.

Similarly, it is preferable that the first calculation means includes means for calculating color-specific amounts of the at least one coloring material for respective colors thereof, and the second calculation means includes means for calculating the printing cost based on the color-specific amounts of the at least one coloring material calculated for the respective colors thereof and prices of color-specific unit amounts of the at least one coloring material set for the respective colors.

According to these preferred embodiments, the printing cost can be calculated based the calculated color-specific unit amounts of the at least one coloring material to be consumed and color-specific unit prices of the at least one coloring material (i.e. by multiplying the color-specific amounts by the respective prices of the color-specific unit amounts). Therefore, even when the prices of unit amounts of the coloring materials are different from each other depending on the colors thereof, it is possible to accurately calculate the printing cost.

Preferably, the printing cost-calculating method further comprises the step of specifying the number of copies of the printed matter, and the step of calculating the printing cost includes calculating the printing cost according to the number of copies specified in the step of specifying the number of copies of the printed matter.

According to this preferred embodiment, it is possible to calculate the printing cost by taking the specified number of copies into account. It should be noted that the phrase "according to the number of copies specified" used here and in corresponding claims appended hereto encompasses meaning of "according to a result of the calculation of multiplying a printing cost per copy by the number of copies" which is based on the fact that since the amount of the at least one coloring material to be consumed is proportional to the number of copies, the printing cost is also proportional to the number of copies, as well as meaning of "according to a result of the calculation of subtracting a quantity discount offered in accordance with an increase in the number of copies from the result of calculation of multiplying the printing cost per copy by the number of copies".

More preferably, the step of calculating the printing cost includes the steps of calculating a cost per copy of the printed matter, and calculating a total cost of the copies of the printed matter the number of which is specified in the step of specifying the number of copies.

According to this preferred embodiment, it is possible to calculate not only the cost per copy (unit price) of the printed matter but also the total cost (total price) of the printed matter corresponding to the specified number of copies.

Preferably, the printing cost-calculating method further comprises the step of specifying a resolution of the printed matter, and the step of calculating the printing cost includes calculating the printing cost according to the resolution specified in the step of specifying the resolution.

According to this preferred embodiment, it is possible to calculate the printing cost by taking the specified resolution into account. More specifically, if the specified resolution is high, the amount of the at least one coloring material to be consumed is inevitably increased because the number of colors of coloring materials which are actually or directly available is limited, and in addition, the high resolution causes an increase in the number of processes for preparing printed matter, and hence the printing cost is also increased. Therefore, by calculating the printing cost according to the specified resolution, it is possible to estimate the printing cost more accurately.

Further, preferably, the at least one coloring material includes at least one color of ink or at least one color of toner.

According to this preferred embodiment, the printing cost-calculating method of the invention can be employed when the printed matter is to be prepared e.g. by an ink jet printer using at least one ink as the at least one coloring material or a laser printer using at least one toner as the at least one coloring material.

Preferably, the step of calculating the amount of the at least one coloring material to be consumed includes calculating the amount of the at least one coloring material to be consumed based on the number of dots to be printed for preparation of the printed matter.

Similarly, the first calculation means calculates the amount of at least one coloring material to be consumed based on the number of dots to be printed for preparation of the printed matter.

According to these preferred embodiments, the amount of the at least one coloring material to be consumed can be calculated based on the number of dots for printing on the printed matter. Therefore, it is possible to calculate the printing cost more accurately.

More preferably, the printing cost-calculating method further comprises the step of carrying out color conversion of the digital image to a subtractive color mixture digital image which is expressed by a subtractive process, when the digital image is an image expressed by an additive process, and the step of calculating the amount of the at least one coloring material to be consumed includes calculating the amount of the at least one coloring material to be consumed based on the subtractive color mixture digital image formed by the color conversion in the step of carrying out color conversion.

Similarly, the printing cost-calculating apparatus according to the second aspect of the invention further comprises color conversion means for carrying out color conversion of the digital image to a subtractive color mixture digital image which is expressed by a subtractive process, when the digital image is an image expressed by an additive process, and the first calculation means includes means for calculating the amount of the at least one coloring material to be consumed, based on the subtractive color mixture digital image formed by the color conversion by the color conversion means.

According to these preferred embodiments, when the digital image is expressed by an additive color process using R (red), G (green), and B (blue), it is converted (color converted) to a subtractive color mixture digital image which is expressed by a subtractive color process using M (magenta), C (cyan), Y (yellow), K (black), (and the like). This color conversion makes it possible to calculate the amount of the at least one coloring material to be consumed based on the subtractive color mixture digital image expressed by colors (M, C, Y, K, etc.) of the coloring materials which are actually used by the subtractive color process in the preparation of the printed matter.

More preferably, the step of calculating the amount of the at least one coloring material to be consumed includes calculating the amount of the at least one coloring material to be consumed, based on amounts of the at least one coloring material calculated with respect to respective different dot sizes.

Similarly, the first calculation means includes means for calculating the amount of the at least one coloring material to be consumed, based on amounts of the at least one coloring material calculated with respect to respective different dot sizes.

According to these preferred embodiments, since the amount of the at least one coloring material to be consumed is calculated not only based on the number of dots, but also based on dot sizes, even when dots are different in size, accurate calculation of the printing cost is possible.

Further preferably, the step of calculating the amount of at least one coloring material to be consumed includes calculating the amount of the at least one coloring material, by looking up a coloring material consumption table associating amounts of the at least one coloring material to be consumed per dot with respective dot sizes.

Similarly, the printing cost-calculating apparatus further storage means for storing a coloring material consumption table associating amounts of the at least one coloring material to be consumed per dot with respective dot sizes, and the first calculation means includes means for calculating the amount of at least one coloring material to be consumed, by looking up the coloring material consumption table stored in the storage means.

According to these preferred embodiments, it is possible to calculate the amount of the at least one coloring material to be consumed for preparation of the printed material, by looking up the coloring material consumption table. This means that no complicated calculation program is required for calculation of the amount of the at least one coloring material to be consumed.

Even more preferably, the printing cost-calculating method further comprises the step of specifying a resolution of the printed matter, and the step of calculating the amount of at least one coloring material to be consumed includes calculating the amounts of the at least one coloring material with respect to the respective different dot sizes according to the resolution specified in the step of specifying a resolution.

Similarly, the printing cost-calculating apparatus further comprises resolution-specifying means for specifying a resolution of the printed matter, and the first calculation means includes means for calculating the amounts of the at least one coloring material with respect to the respective different dot sizes according to the resolution specified by the resolution-specifying means.

According to these preferred embodiments, dot sizes are determined according to a specified resolution, so that even when the resolution has been changed (designated), the user is not required to enter or specify dot sizes changed according to the change in the resolution.

More preferably, when the digital image is expressed in a plurality of colors, the at least one coloring material comprises a plurality of coloring materials having respective different colors, and the first calculation means includes means for calculating respective amounts of the different colors of the coloring materials to be consumed, while the second calculation means includes means for calculating the printing cost based on the respective amounts of the different colors of the coloring materials to be consumed.

According to this preferred embodiment, when the digital image is expressed in a plurality of colors (i.e. in color), the amount of the coloring materials to be consumed can be calculated on a color-by-color basis (for the respective colors M, C, Y, K and the like). More specifically, even when the printed matter is printed in more than one color, such as in color printing, and at the same time the coloring materials are different from each other in price, printing cost can be calculated accurately.

More preferably, the step of calculating the printing cost includes calculating the printing cost by looking up a coloring material price table associating amounts of the at least one coloring material to be consumed with respective prices thereof.

Similarly, the printing cost-calculating apparatus further comprises storage means for storing a coloring material price table associating amounts of the at least one coloring material to be consumed with respective prices thereof, and the second calculation means includes means for calculating the printing cost by looking up the coloring material price table stored in the storage means.

According to these preferred embodiments, it is possible to calculate the printing cost by looking up the coloring material cost table associating amounts of the at least one coloring material to be consumed with respective prices thereof. In short, it is possible to calculate the printing cost without any need to use a complicated calculation program.

More preferably, when the digital image is expressed by a plurality of colors, the at least one coloring material comprises a plurality of coloring materials having respective different colors, and the step of calculating the amount of the at least one coloring material to be consumed includes calculating respective amounts of the different colors of the coloring materials to be consumed, the step of calculating the printing cost including calculating the printing cost by looking up a color-specific coloring material prices table associating respective amounts of different colors of coloring materials with respective prices thereof.

Similarly, the printing cost-calculating apparatus according to the second aspect further comprises storage means for storing a color-specific coloring material prices table associating respective amounts of different colors of coloring materials with respective prices thereof, and the second calculation means includes means for calculating the printing cost by looking up the color-specific coloring material prices table stored by the storage means.

According to these preferred embodiments, when the digital image is expressed in a plurality of colors (in color), it is possible to calculate the printing cost by looking up the color-specific coloring material prices table associating respective amounts of different colors of coloring materials with respective prices thereof. In short, even when the prices of unit amounts of the coloring materials vary with the colors of the coloring materials, it is possible to calculate the printing cost without any need to use a complicated calculation program.

More preferably, when the digital image is expressed by a plurality of colors, the at least one coloring material comprises a plurality of coloring materials having respective different colors, and the step of calculating the amount of the at least one coloring material to be consumed includes calculating respective amounts of the different colors of the coloring materials to be consumed, the step of calculating the printing cost including calculating the printing cost by looking up a color-specific coloring material unit prices table associating units amounts of different coloring materials with respective prices thereof.

Preferably, the prices are variable.

According to this preferred embodiment, even when the kind of the coloring materials is changed, or even when the prices of the coloring materials (or unit amounts thereof) are changed in a floating manner depending on various conditions, it is possible to calculate the printing cost in accordance with the changes in prices (unit prices) of the coloring materials. In short, accurate calculation of the printing cost is possible.

To attain the above object, according to a third aspect of the invention, there is provided a printer driver capable of calculating a printing cost required for preparing printed matter by using at least one coloring material, based on a digital image represented by discrete numerical data,
the printer driver comprising:
first calculation means for calculating an amount of the at least one coloring material to be consumed for preparation of the printed matter, based on the digital image; and
second calculation means for calculating the printing cost based on the amount of the at least one coloring material calculated by the first calculation means, and
wherein the first calculation means calculates the amount of the at least one coloring material to be consumed, based on the number of dots to be printed for preparation of the printed matter.

According to this printer driver, it is possible to accurately and efficiently calculate the printing cost based on the amount of the at least one coloring material to be actually consumed.

To attain the above object, according to a fourth aspect of the invention, there is provided a printing apparatus capable of calculating a printing cost required for preparing printed matter by using at least one coloring material, based on a digital image represented by discrete numerical data,
the printing apparatus comprising:
first calculation means for calculating an amount of the at least one coloring material to be consumed for preparation of the printed matter, based on the digital image;
second calculation means for calculating the printing cost based on the amount of the at least one coloring material calculated by the first calculation means; and
printed matter-preparing means for preparing the printed matter by using the at least one coloring material, based on the digital image.

According to this printing apparatus, it is possible to accurately and efficiently calculate the printing cost based on the amount of the at least one coloring material to be actually consumed, and prepare the printed matter.

Preferably, the first calculation means calculates the amount of the at least one coloring material to be consumed based on the number of dots to be printed for preparation of the printed matter.

Further, preferably, the printed matter-preparing means includes means for preparing the printed matter by an ink jet printing method.

Alternatively, the printed matter-preparing means includes means for preparing the printed matter by an electrophotographic printing method.

To attain the above object, according to a fifth aspect of the invention, there is provided a printing system capable of calculating a printing cost required for preparing printed matter by using at least one coloring material, based on a digital image represented by discrete numerical data,
the printing system comprising:
a printing apparatus including:
   first calculation means for calculating an amount of the at least one coloring material to be consumed for preparation of the printed matter, based on the digital image, and
   second calculation means for calculating the printing cost based on the amount of the at least one coloring material calculated by the first calculation means, and
   printed matter-preparing means for preparing the printed matter by using the at least one coloring material, based on the digital image; and
   digital image-forming means for forming the digital image.

According to this printing apparatus, it is possible to generate digital data representing a digital image, and the generated digital data can be used to calculate printing cost, as well as to prepare printed matter.

Preferably, the digital image-forming means includes digital data-generating means for generating digital data representing the digital image, and the printed matter-preparing means prepares the printed matter based on the digital image.

More preferably, the printing apparatus is capable of receiving digital data generated by the digital data-generating means, via an interface.

Further preferably, the interface enables communications via a predetermined network.

According to these preferred embodiments, it is possible to use digital data received via the interface to calculate printing cost, and prepare printed matter. Further, since the interface enables communications by a predetermined network, the printing apparatus can receive digital data from a remote place.

Even more preferably, the network includes a predetermined internet or a LAN.

According to this preferred embodiment, since an existing network constructed by an internet (such as the Internet) or a LAN can be utilized, it is not required to construct a new network. Further, utilization of a WAN, such as the Internet, makes it possible to readily perform business operation over a further-expanded area.

To attain the above object, according to a sixth aspect of the invention, there is provided a printing cost-calculating system for calculating a printing cost required for preparing printed matter by using at least one coloring material, based on a digital image represented by discrete numerical data,
the printing cost-calculating system comprising:
first calculation means for calculating an amount of the at least one coloring material to be consumed for preparation of the printed matter, based on the digital image; and
second calculation means for calculating the printing cost based on the amount of the at least one coloring material calculated by the first calculation means; and
wherein the first calculation means includes means for calculating amounts of the at least one coloring material for respective colors thereof,
wherein the second calculation means includes means for calculating the printing cost based on the amounts of the at least one coloring material calculated for the respective colors thereof, and prices of unit amounts of the at least one coloring material set for the respective colors, and
wherein the prices are variable.

According to this printing cost-calculating system, it is possible to accurately and efficiently calculate the printing cost based on the amount of the coloring materials to be actually consumed, when the prices of unit amounts of the coloring materials are variable.

To attain the above object, according to a seventh aspect of the invention, there is provided a printing cost-calculating system for calculating a printing cost required for preparing printed matter by using at least one coloring material, based on a digital image represented by discrete numerical data,
the printing cost-calculating system comprising:
first calculation means for calculating an amount of the at least one coloring material to be consumed for preparation of the printed matter, based on the digital image;
second calculation means for calculating the printing cost based on the amount of the at least one coloring material to be consumed calculated by the first calculation means; and
network means capable of automatically responding to an access from outside.

According to this printing cost-calculating system, it is possible to accurately and efficiently calculate the printing cost based on the amount of the at least one coloring material to be actually consumed, in response to a request made by the access from outside.

Preferably, the network means includes a predetermined internet or a LAN.

To attain the above object, according to an eighth aspect of the invention, there is provided a printing cost-calculating system for calculating a printing cost required for preparing printed matter by using at least one coloring material, based on a digital image represented by discrete numerical data,
the printing cost-calculating system comprising:
first calculation means for calculating an amount of the at least one coloring material to be consumed for preparation of the printed matter, based on the digital image;
second calculation means for calculating the printing cost based on the amount of the at least one coloring material to be consumed calculated by the first calculation means;
digital image-acquiring means for acquiring the digital image from a client requesting calculation of the printing cost; and
printing condition-acquiring means for acquiring printing conditions under which the printed matter should be prepared based on the digital image acquired by the digital image-acquiring means, from the client and
wherein the second calculation means calculates the printing cost according to the printing conditions acquired by the printing condition-acquiring means.

According to this printing cost-calculating system, it is possible to acquire a digital image and printing conditions from a client requesting estimation of the printing cost, and then calculate the printing cost according to the printing conditions. Therefore, it is possible to calculate a cost estimate according to the client's needs.

Preferably, the printing cost-calculating system further comprises printing cost-presenting means for presenting the printing cost calculated by the second calculation means to the client.

According to this preferred embodiment, it is possible to present a printing cost calculated in response to a request from a client, to the client.

To attain the above object, according to a ninth aspect of the invention, there is provided a printed matter-issuing system capable of calculating a printing cost required for preparing printed matter by using at least one coloring material, based on a digital image represented by discrete numerical data, comprising:
a printing cost-calculating system including:
   first calculation means for calculating an amount of the at least one coloring material to be consumed for preparation of the printed matter, based on the digital image,
   second calculation means for calculating the printing cost based on the amount of the at least one coloring material to be consumed calculated by the first calculation means,
   digital image-acquiring means for acquiring the digital image from a client requesting calculation of the printing cost,
   printing condition-acquiring means for acquiring printing conditions under which the printed matter should be prepared based on the digital image acquired by the digital image-acquiring means, from the client, and
   printing cost-presenting means for presenting the printing cost calculated by the second calculation means to the client,
wherein the second calculation means calculates the printing cost according to the printing conditions acquired by the printing condition-acquiring means; and
printed matter-issuing means for issuing the printed matter prepared based on the digital image acquired by the digital image-acquiring means, under the printing conditions acquired by the printing condition-acquiring means, to the client.

According to this system, it is possible to calculate the printing cost accurately and efficiently, and issue printed matter which meets the needs of the client.

Preferably, the printed matter-issuing system further comprises sample print-presenting means for presenting a sample print of the printed matter prepared based on the printing conditions acquired by the printing condition-acquiring means to the client, before issuing of the printed matter by the printed matter-issuing me.

According to this preferred embodiment, it is possible to present a sample print of the printed matter prepared based on printing conditions received from the client, to the client, before issuing of the printed matter. In other words, the client can check on the sample print prepared according to the printing conditions the client sent, and then request issuing of the printed matter.

More preferably, the printed matter-issuing system further comprises printing cost-presenting means for presenting the printing cost calculated by the second calculation means in association with the sample print prepared by the sample print-presenting means.

According to this preferred embodiment, it is possible to present the printing cost in association with a sample print of the printed matter. That is, the client can check not only the sample print but also an estimate corresponding thereto.

Preferably, the printing conditions include at least one of the number of copies of the printed matter to be prepared, a sheet type of the printed matter, a size of the printed matter, a desired printing cost of the printed matter, a desired delivery date for the printed matter, respective colors of components forming a print image to be printed for preparation of the printed matter based on the digital image, a proportion or size of the print image with respect to the printed matter, densities of the respective components, information as to whether a picture or a photograph is contained in each of the components, and a proportion of the picture or the photograph with respect to each of the components or a size of the picture or the photograph.

According to this preferred embodiment, a client can specify as printing conditions the number of copies of printed matter to be prepared, a sheet type of the printed matter, a size of the printed matter, a desired printing cost of the printed matter, a desired delivery data for the printed matter, colors of respective components forming a print image to be printed on the printed matter based on the digital image, a proportion or size of the print image with respect to the printed matter, densities of the respective components, information as to whether a picture or a photograph is contained in each of the components, and a proportion of the picture or the photograph with respect to each of the components with respect or a size of the picture or the photograph.

Preferably, the printed matter-issuing system further comprises client information-acquiring means for acquiring information of the client.

According to this preferred embodiment, it is possible to acquire information of a client, such as the client's name, address, and so forth, thereby utilizing the information for management of the client.

Preferably, the printing cost calculated by the second calculation means is a printing fee charged on the client taking all costs into account.

According to this preferred embodiment, it is possible to calculate a printing cost as a printing price including all costs required for preparation of preparation of printed matter. That is, a client can check on the calculated printing price and then request issuing of the printed matter.

Preferably, the printed matter is prepared by an ink jet printing method.

According to this preferred embodiment, since printing is carried out by the ink jet printing method, particularly when color printing is performed, it is easy to obtain printed matter relatively beautiful in color. Further, e.g. when photographic data is contained in print data, it is possible to obtain printed matter excellent in appearance.

The above and other objects, features, and advantages of the invention will become more apparent from the following detailed description taken in conjunction with the accompanying drawings.

### BRIEF DESCRIPTION OF THE DRAWINGS

FIG. 1 is a diagram showing a system configuration of a printed matter-issuing system according to a first embodiment of the invention;
FIG. 2 is a diagram showing a sequence of screens displayed on a display, for execution of an "estimation request & provisional order" process according to the embodiment of the invention, which is useful in explaining an operating procedure for execution of the process;
FIG. 3 is a continuation of FIG. 2;
FIG. 4 is a diagram showing a sequence of screens displayed on a display, for execution of an "estimate check & formal order" process according to the embodiment of the invention, which is useful in explaining an operating procedure for execution of the process;
FIG. 5 is a continuation of FIG. 4;
FIG. 6 is a continuation of FIG. 5;
FIG. 7 is a continuation of FIG. 6;
FIGS. 8A to 8F are diagrams useful in explaining a printing cost-calculating method employed by the first embodiment;
FIG. 9 shows an example of printed matter to be issued by the FIG. 1 printed matter-issuing system;
FIG. 10 is a view showing a screen displayed on the display, according to an example of application of the first embodiment of the invention;
FIGS. 11A and 11B are diagrams useful in explaining a printing cost-calculating method employed by a second embodiment of the invention;
FIGS. 12A and 12B are continuations of FIGS. 11A and 11B;
FIGS. 13A and 13B show tables for reference in explaining the printing cost-calculating method employed by the second embodiment; and
FIG. 14 is a diagram useful in explaining a third embodiment of the invention.

### DETAILED DESCRIPTION OF PREFERRED EMBODIMENTS

The invention will now be described in detail with reference to drawings showing embodiments thereof.

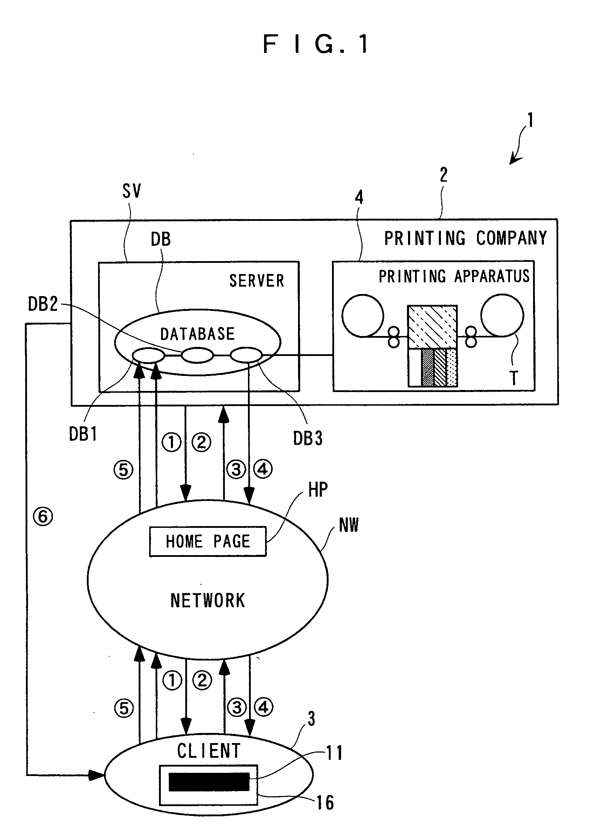

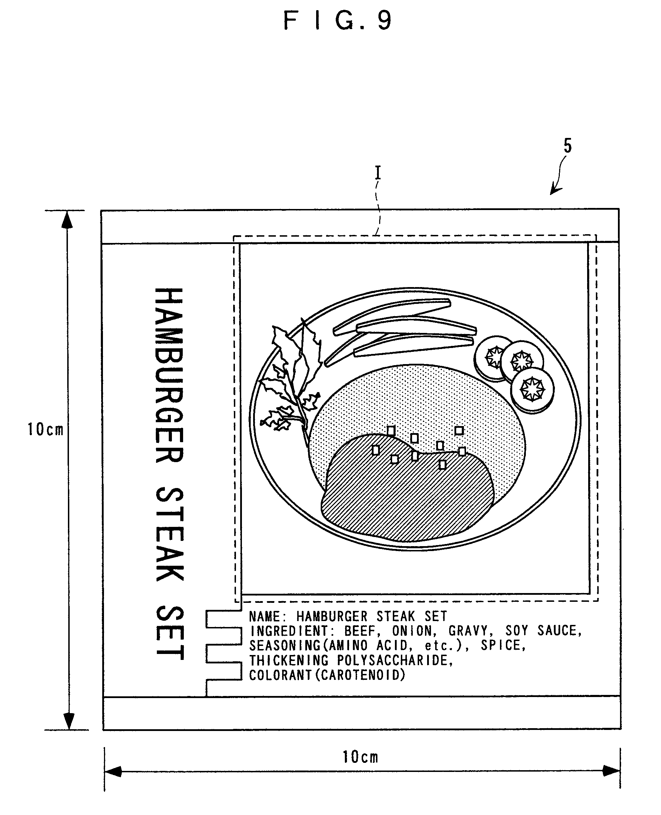

Referring first to FIG. 1, a printed matter-issuing system 1 according to a first embodiment of the invention is comprised of a printing company 2 which operates/manages the system 1, a network NW, and a plurality of clients 3 (accurately or specifically, terminal devices 16 as communication terminals used by the respective clients 3, only one of which is shown in the figure) each capable of communicating with a server SV managed by the printing company 2, via the network NW. In the printed matter-issuing system 1, the printing company 2 estimates (or calculates) a printing cost according to an order for printed matter 5 (see FIG. 9) from each client 3, and then issues the printed matter 5 prepared by a printing apparatus 4. The server SV receives data of a digital image 6 (see FIG. 8A) and printing conditions from a client 3, and stores the data therein. Further, the server SV includes a database DB storing data associated with sample prints prepared based on the contents of the request from the client 3. On the network NW, there exists a home page HP linked to the server SV of the printing company 2.

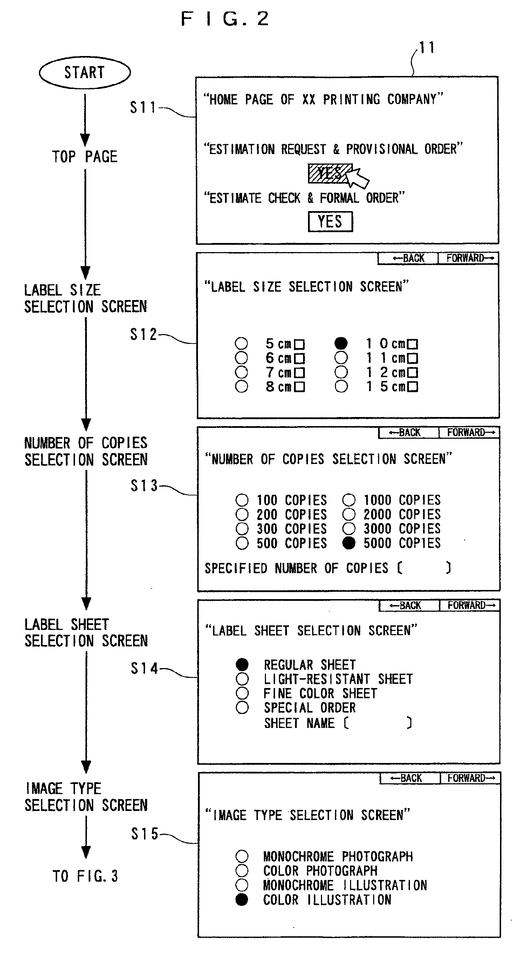

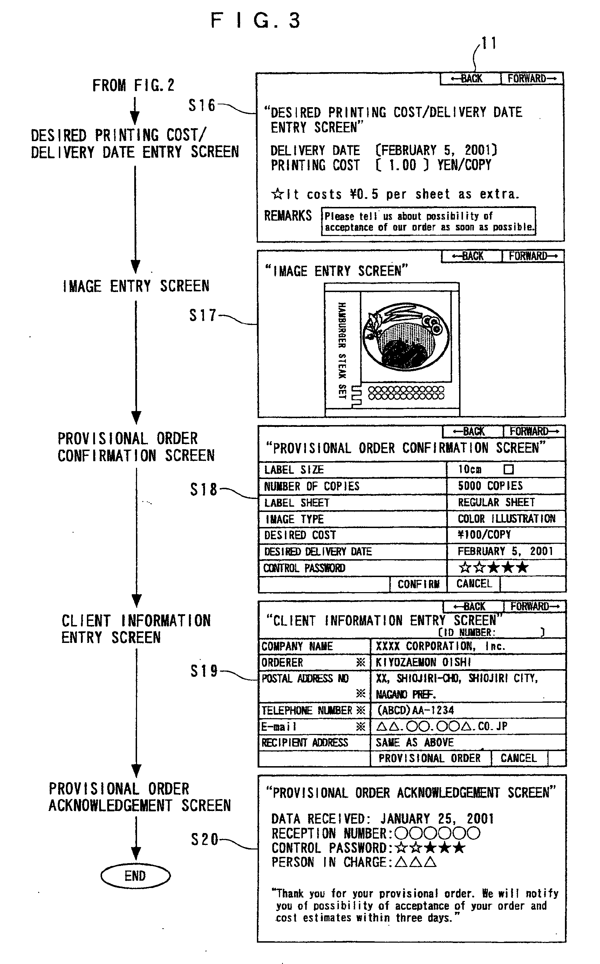

Each client 3 orders printed matter 5 by using a terminal device 16, such as a personal computer, a cellular phone or a pocket-sized E-mail terminal including one called pocket board. The client 3 connects the terminal device 16 to the network NW for access to the desired home page HP (i.e. the home page linked to the server SV managed by the printing company 2), and then issues an order, following a sequence of screens displayed on a display 11 of the terminal device 16. The screens are displayed as illustrated in FIGS. 2 to 7. A method of ordering printed matter will be described in detail hereinafter. Access to the home page HP can be gained by various well-known methods, and hence description thereof is omitted.

It should be noted that the network NW is preferably constructed by utilizing the Internet or an existing network system utilizing a LAN. According to this method, it is not required to construct a new network. Further, utilization of a WAN such as the Internet makes it possible to easily adapt the system 1 to business operation over a even wider area.

As described above, the printing company 2 not only owns the printing apparatus 4 for preparing printed matter 5, but also manages the server SV. The server SV includes the database DB storing various kinds of data required for operating/managing the system 1. The database DB is comprised of a received data storage database DB1 for storing data received from the clients 3, a send data storage database DB3 for storing data to be transmitted to the clients 3, and a client information database DB2 for storing information of the clients 3.

The received data storage database DB1 stores data of digital images 6 and corresponding printing conditions received from the respective clients 3. On the other hand, the send data storage database DB3 stores data of a plurality of sample prints and corresponding estimates prepared based on the contents of a request from each of the clients 3. Further, the database DB3 is linked to the printing apparatus 4 for carrying out printing based on a sample print selected by a client 3, for preparation of printed matter 5 ordered by the client 3.

The client information database DB2 stores information of the clients 3 (e.g. the name and address of each client 3; see S19 in FIG. 3). Each data file stored in the database DB2 has the corresponding client's ID number added thereto, so that any client 3 who has accessed the home page HP for estimation request before can call or retrieve data by designating (entering) the client's own ID number. Accordingly, the client 3 does not need to enter the name, address and so forth, in placing an order, which facilitates ordering operation. Further, the client information database DB2 is linked to the received data storage database DB1 and the send data storage database DB3, so that the printing company 2 can check on, in real time, who has requested estimation of which print, and to whom the printed matter 5 has been issued. This enables the printing company 2 to carry out customer management and issuing processing efficiently.

Now, the outline of the system 1 will be described. In the system 1, in response to an order of a client 3 for printed matter 5, the printing company 2 performs estimation (calculation of a printing cost) and issuing of the printed matter 5. The following description will be given on the assumption that the client 3 has made a request (order) for issuing of a label shown in FIG. 9 which is to be attached to a processed food article. The client 3 can also utilize the system 1 not for requesting issuing of the printed matter 5 (label), but for acquiring an estimate. However, in the following, description will be given of a case where the client 3 makes an estimation request (provisional order), and then carries out a process for estimate confirmation and issuing request (formal order).

FIG. 1 illustrates the basic configuration of the printed matter-issuing system 1 according to the first embodiment of the invention. As shown in the figure, the client 3 operates the terminal device 16 to access the home page HP managed by the printing company 2, and inputs the digital image 6 and the printing conditions into the terminal device 16 so as to make a request for estimation of the printed matter 5. The printing company 2 receives data of the digital image 6 and the printing conditions from the client 3 via the network NW, and stores the data in the database DB1 (circled 1). The printing company 2 notifies the client 3, via the network NW, of the fact that the company 2 has received the estimation request from the client 3 as well as of a control password (i.e. a password necessary for opening a password-protected data of cost estimates, in checking on the price estimates) corresponding to the present request (circled 2). Several days (i.e. a number of days specified by the printing company 2 in the estimation request process) later, the client 3 accesses the home page HP again, and enters the control password to make a request for permitting the client 3 to check on a sample prints and estimates corresponding thereto (circled 3). In response to the request, the printing company 2 presents the sample prints and the estimates (circled 4). If the client 3 finds a desirable sample print and a corresponding estimate among the presented ones, he issues a formal order (circled 5). The printing company 2 operates the printing apparatus 4 to prepare the printed matter (label) 5 under the specified printing conditions by a specified delivery date. Then, the printing company 2 issues the prepared printed matter 5, and charges the client 3 at the same time (circled 6). It should be noted that if the client 3 finds no desirable ones among the sample prints and estimates presented in the step indicated by circled 4, the client 3 can access the home page HP again to request estimation under other conditions.

Now, the processing executed in the above step indicated by circled 4, in which the printing company 2 presents the sample prints and the corresponding estimates to the client 3, will be described in detail. The sample prints and the estimates are prepared based on the contents of the request (the digital image 6 and the printing conditions: see S17 and S18 in FIG. 3) from the client 3. Therefore, if a desired cost or a desired delivery date specified by the client 3 is unreasonable, it is actually impossible for the printing company 2 to provide the samples. For this reason, the following description will be given on the assumption that the contents of the client's request are within a range of conditions under which the printing company 2 can fill an order for the printed matter 5. It should be noted that if the contents of the client's request are outside the above range, the printing company 2 preferably notifies the clients 3 of the fact.

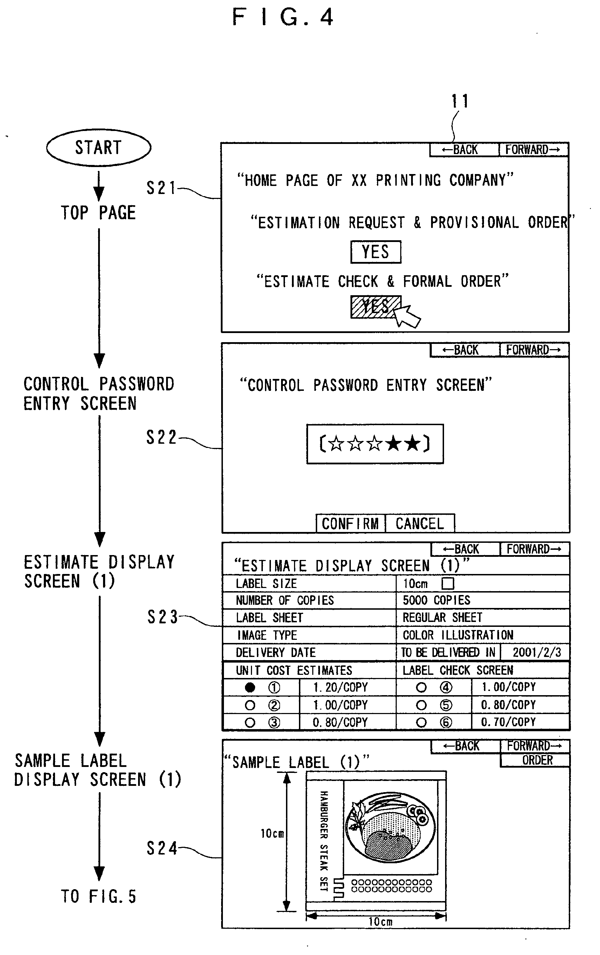

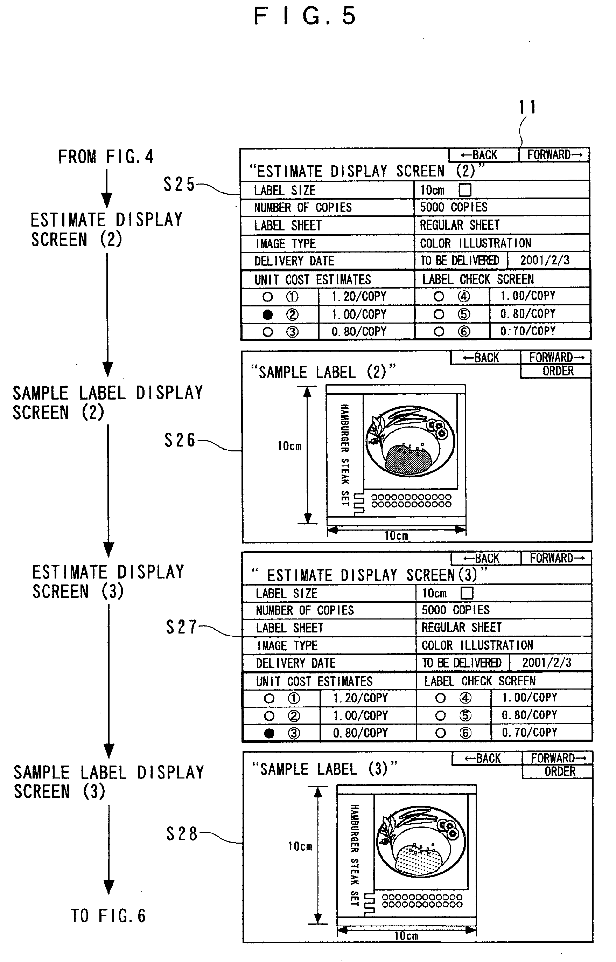

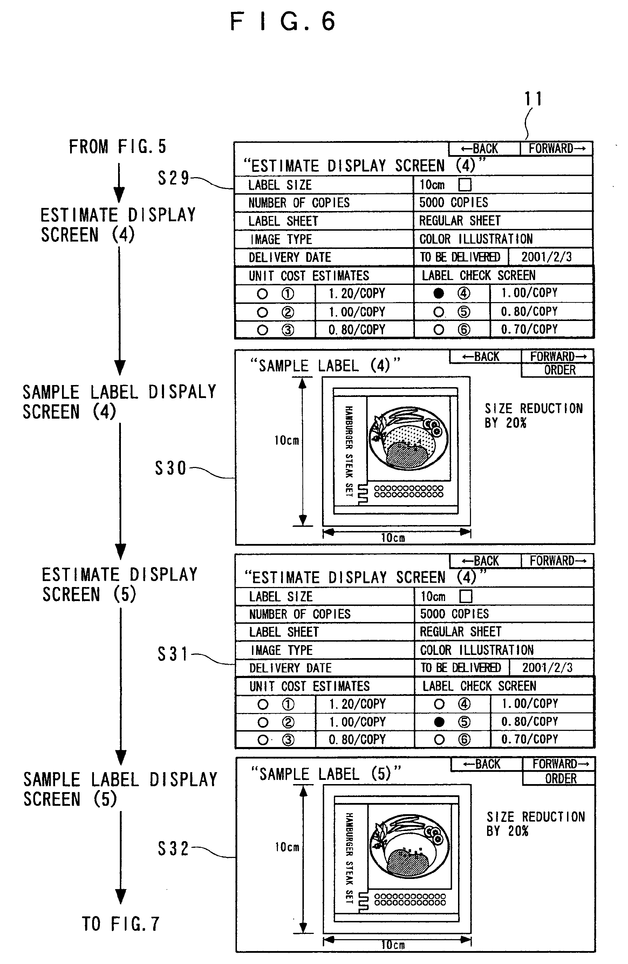

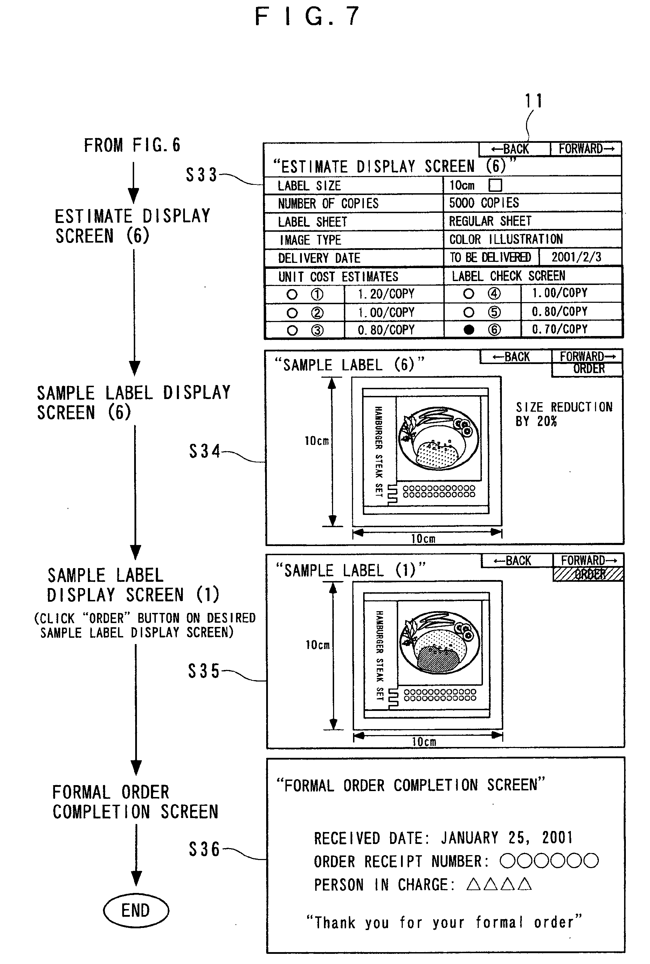

First, description will be given of a manner of presentation of the sample prints. The sample prints for presentation include six types in total which are different in density and size (see S24 in FIG. 4, S26 and S28 in FIG. 5, S30 and S32 in FIG. 6, and S34 in FIG. 7). More specifically, there are presented three types prepared according to a size specified by the client 3: one (type 2: S26 in FIG. 5) having a color density corresponding to the desired cost specified by the client 3, another (type 1: S24 in FIG. 4) having an increased color density, and the other (type 3: S28 in FIG. 5) having a decreased color density, and there are also presented three types having a size reduced from the size specified by the client 3 (to 80% of the specified size, in the illustrated example): one (type 4: S30 in FIG. 6) having the color density corresponding to the desired cost specified by the client 3, another (type 5: S32 in FIG. 6) having a decreased color density, and the other (type 6: S34 in FIG. 7) having a further decreased color density so as to lower the cost.

It should be noted that types of sample prints to be presented are not limited to the above six, but a plurality of samples different in resolution or image quality may be presented. Alternatively, sample prints modified in color arrangement or design may be prepared e.g. by teaming up with a designer and then presented to the client 3.

Next, description will be given of a first printing cost-calculating method of calculating a printing cost (running cost containing no profit for the printing company 2, but calculated only based on an amount of ink consumed) which is used as a reference when estimates corresponding to respective sample prints are presented. In the description, a case is taken as an example, where an ink jet printer (printer type which ejects ink in the form of ink droplets though thin nozzles to thereby record an image on a recording medium opposed to the nozzles) is employed as the printing apparatus 4 for printing operation. Actually, however, the printing may be carried out by a printing method specified by the client 3 (e.g. by using an electrophotographic printer). In this case, it is possible to output printed matter 5 which meets the needs of the client 3 (though an estimate corresponding to a sample print generated by the electrophotographic printer is prepared by a calculating method different from the method described below).

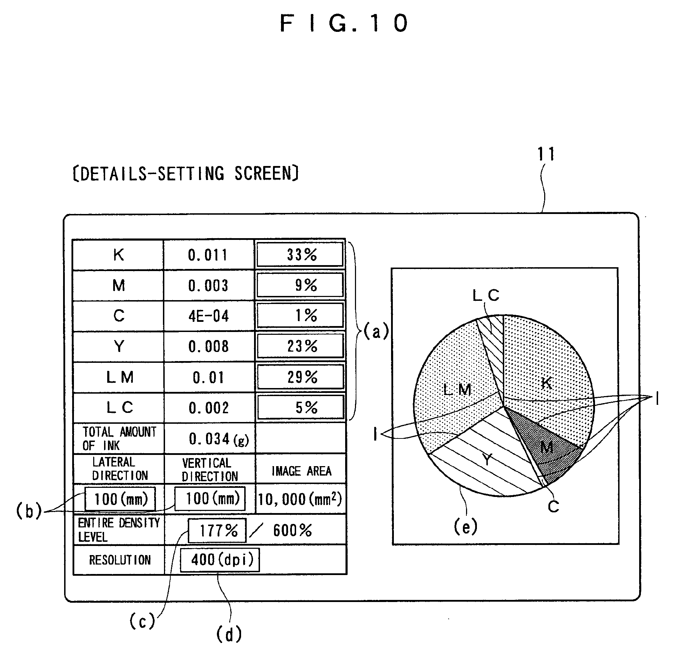

First, the printing company 2 carries out pseudo-gradation processing by the dither method on a digital image 6 received from the client 3, to thereby count gradation-specific numbers of dots on a color-by-color basis. Then, the total of the gradation-specific numbers of the dots of each color is calculated. On the display 11, the colors of the digital image 6 are expressed by using R (red), G (green) and B (blue) colors which are the "additive primary colors (three colored lights used in the additive color process)", but in the printing apparatus 4 (ink jet printer), M (magenta), C (cyan) and Y (yellow) colors which are the "subtractive primary colors (colors of three absorbing materials used in the subtractive color process)" are used, and hence the colors of the digital image 6 are reproduced by converting the "additive primary colors" to the "subtractive primary colors" based on the predetermined correlation between the additive color mixture and the subtractive color mixture. It should be noted that the printing apparatus 4 is provided with six colors of ink, i.e. K (black), M, C, Y, LM (light magenta), and LC (light cyan) (see FIG. 10), and portions of the image having color dots overlapping each other are expressed by the subtractive color process, while portions having dots arranged parallely without overlapping each other are expressed by the parallel additive color process. In the following example, however, for simplicity, it is assumed that a monochrome image was transmitted as a digital image (which means that printed matter 5 can be prepared in the K color ink alone).

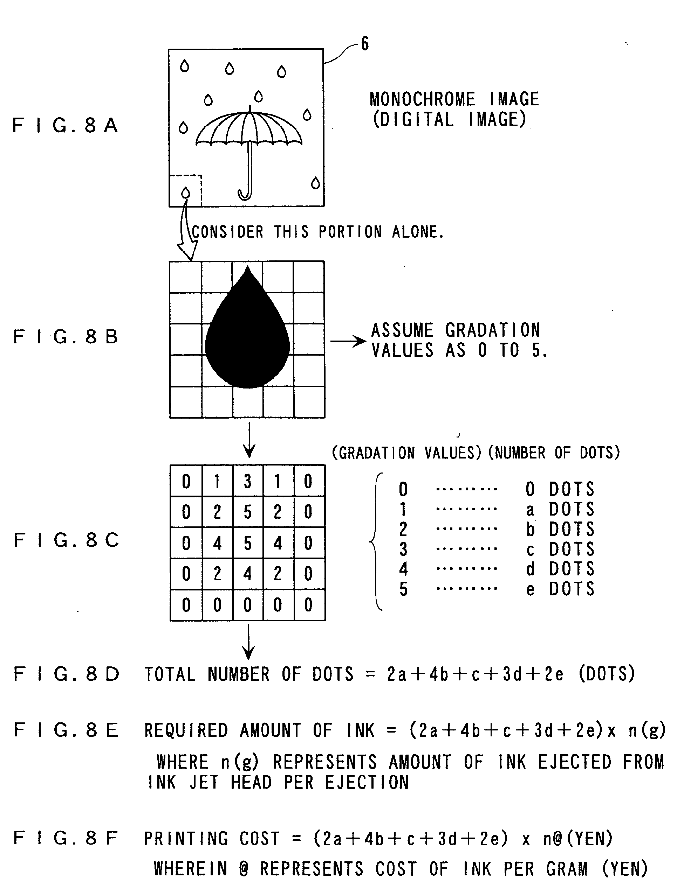

A portion of a received digital image 6 shown in FIG. 8A is extracted from the digital image 6, and split into matrix elements forming a 5 x 5 dot matrix shown in FIG. 8B, for explanation of the method. It should be noted that a portion to be extracted and the number of matrix elements depend on a predetermined resolution. When gradation values capable of representing gray tones of the image are defined as 0 to 5, the matrix elements of the 5 x 5 dot matrix assume respective gradation values e.g. as shown in FIG. 8C. More specifically, assuming that matrix elements having gradation values of 0, 1, 2, 3, 4, and 5 contain no dot, "a" dots, "c" dots, "d" dots, and "e" dots, respectively, the entire 5 x 5 dot matrix consisting of thirteen matrix elements having a gradation value of 0, two matrix elements having a gradation value of 1, four matrix elements having a gradation value of 2, one matrix element having a gradation value of 3, three matrix elements having a gradation value of 4, and two matrix elements having a gradation value of 5 contains (2a + 4b + c + 3d + 2e) dots as shown in FIG. 8D.

Assuming that in the ink jet printer used for preparation of the printed matter 5, the amount of ink to be ejected from each nozzle of the ink jet head of the printer for a single ejecting operation is n (g), the amount of ink to be consumed is "(2a + 4b + c + 3d + 2e) x n (g)" as shown in FIG. 8E. Therefore, if the price of a unit amount (i.e. unit cost) of the ink (K color ink printing the monochrome image in the present example) is @ (yen), the printing cost amounts to "(2a + 4b + c + 3d + 2e) x n@ (yen)" as shown in FIG. 8F.

When a digital image 6 transmitted from the client 3 is a color image, the same processing as described above is carried out for each of the six colors mentioned above, and then printing costs calculated for the respective colors are added up to thereby determine the total printing cost of the printed matter. Actually, the printing cost changes depending on the number of print copies and the type of an image, which are specified by the client 3, and/or a delivery date desired by the client 3. Although detailed description is omitted because it requires complicated calculation, when the specified number of copies is large, a discount rate is considered according to the number of copies, and if the image type is "photograph" or the like which requires a high resolution, the printing cost is increased. Further, when a period before a desired delivery date is extremely short, the rate of extra charge therefor is considered.

The method of ordering printed matter 5 by utilizing the present system 1 will now be described in detail with reference to FIGS. 2 to 7 showing examples of screens displayed on the display 11. First, the client 3 operates the terminal device 16 to access the home page HP managed by the printing company 2. Although the terminal device 16 can be implemented by any one of various devices, such as a personal computer (PC), a cellular phone, and a pocket board, as described hereinbefore, in the following description, it is assumed that a personal computer is employed. First, a top page is displayed on the display 11. The client 3 can select any of an "estimation request & provisional order" process and an "estimate check & formal order" process. In the present description, first, the client 3 selects the "estimation request & provisional order" process to make a request for cost estimation, and then selects the "estimate check & formal order" process to confirm a cost estimate and make a formal order.

As shown in FIG. 2, first, in the state of the top page being displayed on the display 11, the client 3 moves a pointer (represented by a hollow arrow on the display 11 in the figure) to an "estimation request & provisional order" icon or a "YES" icon displayed therebelow, and then clicks the pointer thereon (S11) (in the following, since selection of each icon by the client 3 is carried out in the same manner, description of each operation therefor is omitted.)

The display 11 is switched to a "label size selection screen", where the client 3 selects a desired label size (S12). Each label size denotes the size of a square label, and eight types having different label sizes, i.e. "5 cm square (in FIGS. 7 et seq., "square" is represented by a square symbol)", "6 cm square", "7 cm square", "8 cm square", "10 cm square", "11 cm square", "12 cm square" and "15 cm square", are displayed as candidates. In the present example, the type of "10 cm square" is selected. As shown in the figure, when the type of "10 cm square" is selected, a round icon corresponding to the type is inverted from white to black. It should be noted that candidate labels listed for selection of a label size may include not only labels having square shapes but also ones having other shapes, such as rectangle, rhombus, circle, and so forth. Further, the screen may be set such that the size of an image portion (print image portion) associated with a selected label size can also be selected (for example, when the selected label size is 7 cm x 7 cm, if the option "5 cm x 5 cm" is selected for the size of an image portion, margins of 1 cm are designated to be formed at respective four sides of the label). This makes it possible to prepare printed matter (label) 5 which meets the needs of the client 3 more favorably.

When the label size is selected, the display 11 is switched to a "number of copies selection screen" (S13). The display 11 can also be switched to the following screen ("number of copies selection screen") by clicking a "forward" button displayed in the upper right corner of the display 11. On the other hand, by clicking a "back" button, the display 11 can be returned to the immediately preceding screen. In the "number of copies selection screen", the number of copies of the printed matter 5 (hereinafter simply referred to as "the label") ordered by the client 3 is selected. Eight candidate number of copies, i.e. options "100 copies", "200 copies", "300 copies", "500 copies", "1000 copies", "2000 copies", "3000 copies" and "5000 copies" are displayed. In the present example, it is assumed that "5000 copies" is selected. It should be noted that if the client 3 wants to order more than 5000 copies or copies the number of which is not displayed as a candidate, such as "1500 copies", a numerical value indicative of the desired number of copies can be entered as a "specified number of copies".

Then, the display 11 is switched to a "label sheet selection screen", where a desired label sheet type is selected by the client 3 (S14). On the display 11, options "regular sheet", "light-resistant sheet", "fine color sheet" and "special order" are displayed. The "regular sheet", the "light-resistant sheet" and the "fine color sheet" are selectable candidate label sheets. These label sheets are all transparent and colorless print media, though not specifically denoted on the screen. The option "special order" is selected when the client 3 wants to specify a label sheet type which is not displayed on the screen. Needless to say, an increased number of options may be provided as candidate label sheet types. Further, in this case, the screen may be set such that options which are not displayed on the screen at present can be cyclically displayed by depressing a cursor key on a keyboard connected to the personal computer. Furthermore, when there exist a large number of types of label sheets which can be selected, the screen may be set such that each label sheet name can be searched for by an initial letter thereof, instead of each label sheet name being displayed as an icon. This makes it possible to find a desired label sheet name quickly. In the present example, it is assumed that the "regular sheet" is selected.

Then, the display 11 is switched to an "image type selection screen", where a desired image type is selected by the client 3 (S15). Options "monochrome photograph", "color photograph", "monochrome illustration" and "color illustration" are displayed on the screen. According to an image type selected here, a resolution and a density based on which a label is prepared, and a parameter for use in calculating a printing cost are determined. More specifically, when the "monochrome illustration" or the "color illustration" is selected, the resolution of the label is determined as 720 (dpi), while when the "monochrome photograph" or the "color photograph" is selected, the resolution of the label is determined as 1440 (dpi). Further, the "color photograph" or the "color illustration" requires more processing steps for calculating the printing cost than the "monochrome photograph" or the "monochrome illustration", and hence when the former is selected, the printing cost is higher than when the latter is selected. In the illustrated example, it is assumed that the "color illustration" is selected.

Subsequently, as shown in FIG. 3, the display 11 is switched to a "desired printing cost/delivery date entry screen", where a desired printing cost and a desired delivery date are entered by the client 3 (S16). In this step, the printing cost and the delivery data are each designated by entering a numerical value. However, a date within three days from the entry operation cannot be selected as the desired delivery date. Further, a delivery date which can be entered in the present step means a "shipping day" when the printed matter is shipped from the printing company 2. Therefore, if the client 3 wants to specify an "arrival day" on which the printed matter reaches the client 3, the date is entered in a remarks field separate from a field for entry of a delivery date. Further, the client 3 enters a desired printing cost per copy in a "printing cost" field. In this case, a sheet cost (five yen in the case of the "regular sheet" being selected) is additionally required, and hence the printing cost is entered as a cost exclusive of the sheet cost. The client 3 can also use the remarks field to enter a message to be directly transmitted to the printing company 2. In illustrated example, it is assumed that "February 5, 2001" and "¥1.00/copy" are entered, respectively, as the desired delivery date and the desired printing cost, and a message is entered in the remarks field, saying "Please tell us about possibility of acceptance of our order as soon as possible".

Subsequently, the display 11 is switched to an "image entry screen", where a desired digital image 6 is entered by the client 3 (S17). In this step, although not shown in the figure, guidance according to an image entry (pasting) method is displayed on the screen so as to facilitate operation to be executed by the client 3, so that the client 3 can enter the image following the guidance. When it is difficult to enter the image in the step (e.g. when the image is prepared by software which is not compatible with the present Web page management program), the system 1 is preferably configured such that the image may be stored in a recording medium at a later date, and sent by mail or E-mail to the printing company 2.

When the image entry is completed, the display 11 is switched to the "provisional order confirmation screen" (S18), where the various printing conditions specified or entered by the client 3 are displayed. Further, in this step, a "control password" is designated which will authorize the client 3 to check on an estimate at a later date. When the printing conditions displayed on the screen agree with the provisional order (estimation request) that the client 3 intends to issue, the client 3 clicks a "confirm" icon, whereas when the printing conditions disagree with the provisional order, the client 3 clicks a "cancel" icon.

When the "confirm" icon is clicked by the client 3, the display 11 is switched to a "client information entry screen" (S19). Client information to be entered includes a "company name", an "orderer name", a "postal address", a "telephone number", an "E-mail address" and a "recipient address", and the "orderer name", the "postal address", the "telephone number", and the "E-mail address" are indispensable entry items (asterisked in the illustrated figure). After confirmation of the entered items, the client 3 clicks a "provisional order" icon to issue the provisional order. It should be noted that when a client 3 who made a request in the past enters the client's "ID number" (displayed in the upper right-hand corner of the display 11), the above contents are automatically displayed. Therefore, in this case, the client 3 is only required to correct some of contents which do not suit the present request, and then click the "provisional order" icon.

Then, the display 11 is switched to a "provisional order acknowledgment screen", where items "date received", "reception number", "control password" and "person in charge" are displayed together with a message saying "Thank you for your provisional order. We will notify you of possibility of acceptance of your order and cost estimates within three days" (S20). The client 3 writes down the contents of the "provisional order acknowledgment screen" or prints out the same, and waits for "reply E-mail" to be transmitted from the printing company 2 at a later date.

Next, operation for executing the "estimate check & formal order" process will be described. This operation is carried out after execution of the aforementioned "estimation request & provisional order" process, and checking on the "reply E-mail" received from the printing company 2. It should be noted that since the message "Please tell us about possibility of acceptance of our order as soon as possible" was written in the remarks field by the client 3 in the step of executing the "estimation request & provisional order" process, it is preferred that an E-mail notifying the client 3 of possibility of order acceptance (e.g. "We can accept your order. Please wait for a while until we transmit "reply E-mail" in the near future) is sent to the client 3.

Although not shown in the figure, the "reply E-mail" says "Please confirm the cost estimate on our home page. Our address is ···". By inputting the address written here to a Web browser, the client 3 can access the top page of the printing company 2 as shown in a step S21 in FIG. 4. It should be noted that the "control password" displayed on the "provisional order acknowledgment screen" (S20 in FIG. 3) may be presented again (or for the first time) here. This makes it possible to eliminate a problem that a client 3 having forgotten the password cannot check on a cost estimate.

First, when the client 3 accesses the top page of the printing company 2, the screen identical to that displayed in the step S11 in FIG. 2 is displayed. This time, the client 3 clicks the "estimate check & formal order" icon (or a "yes" icon therebelow), and then the display 11 is switched to an "control password entry screen" (S22). When the client 3 enters a valid control password, and then clicks a "confirm" icon, the display 11 is switched to the following "estimate display screen (1)" (S23). If an invalid control password is entered in the step S22, a message is displayed on the screen, saying "The entered password is not valid. Please enter your password again".

When the display 11 is switched to the "estimate display screen (1)", the items of "label size", "number of copies", "label sheet", "image type", "delivery date" and "unit cost estimates" are displayed based on the contents selected and entered in the "estimation request & provisional order screen" process. In the illustrated example, it is assumed that the printing company 2 has determined that the printed matter can be delivered before the delivery date specified by the client 3, and hence the "delivery date" is advanced by two days. Further, costs corresponding to respective six patterns different in density and size are displayed as "unit cost estimates". It should be noted that each of the "unit cost estimates" includes a printing cost (running cost) calculated according to the printing cost-calculating method described above, and a profit for the printing company 2. Then, when the client 3 selects the number of a unit cost estimate for a check and then clicks a "label check screen" icon, a sample label corresponding to the selected number is displayed.

For example, if the client 3 selects a "unit cost estimate circled 1 ¥1.20/copy" (S23), an "sample label (1)" is displayed (S24). If a "unit cost estimate circled 2 ¥1.00/copy" is selected (S25 in FIG. 5), a "sample label (2)" is displayed (S26). Further, if a "unit cost estimate circled 3 ¥0.80/copy" is selected (S27), a "sample label (3)" is displayed (S28). Thus, the "unit cost estimate (1)" to the "unit cost estimate (3)" display the sample labels (1) to (3), which have respective different densities (progressively reduced in the mentioned order). As shown in these examples of the sample labels, as the density is reduced, the estimated unit cost becomes lower. On the other hand, if a "unit cost estimate circled 4 ¥1.00/copy" is selected (S29 in FIG. 6), a "sample label (4)" is displayed (S30). If a "unit cost estimate circled 5 ¥0.80/copy" is selected (S31), a "sample label (5)" is displayed (S32). Further, if a "unit cost estimate. circled 6 ¥0.70/copy" is selected (S33 in FIG. 7), a "sample label (6)" is displayed (S34). Thus, the "unit cost estimate (4)" to the "unit cost estimate circled 6" display the sample labels (4) to (6), which have an image portion reduced in size to 80 % of the specified size and respective different densities (progressively reduced in the mentioned order). As shown in these examples of the sample labels, when the size of the image portion is reduced, the estimated unit cost becomes lower. Preferably, the display screen of each label sample can be zoomed in, as required, by the client 3. This allows the client 3 to check on further details of a sample label.

When the client 3 clicks an "order" icon on the screen of a desired "sample label estimate" (it is assumed here that the "sample label (1)" is selected) (S35), the display 11 is switched to a "formal order completion screen" (S36), where the "date received", the "order receipt number" and the "person in charge" are displayed, and at the same time a message is displayed, saying "Thank you for your formal order". Thereafter, the printing company 2 produces a specified number of labels by using the printing apparatus 4, and delivers the labels to the client 3 by the "delivery date" written in the "estimate display screen (1)". At the same time, the printing company 2 charges the client 3 a sum (¥8,500 (+ consumption tax)) including an amount of money obtained by multiplying the estimated unit cost (¥1.20/copy) by the specified number (5000) of copies and a sheet cost (¥0.50/sheet x 5000 sheets).

As described above, according to the present invention, when printing is to be performed e.g. by an ink jet printer using coloring materials, a printing cost is estimated based on the amount of coloring materials to be actually consumed for preparation of printed matter 5 based on a digital image 6 and printing conditions transmitted from a client 3, so that it is possible to calculate an accurate printing cost. Moreover, the color-specific amounts of the coloring materials to be consumed can be estimated, so that even when color-specific unit costs of the respective coloring materials are different from each other, it is possible to calculate an accurate cost estimate extremely close to an actual printing cost.

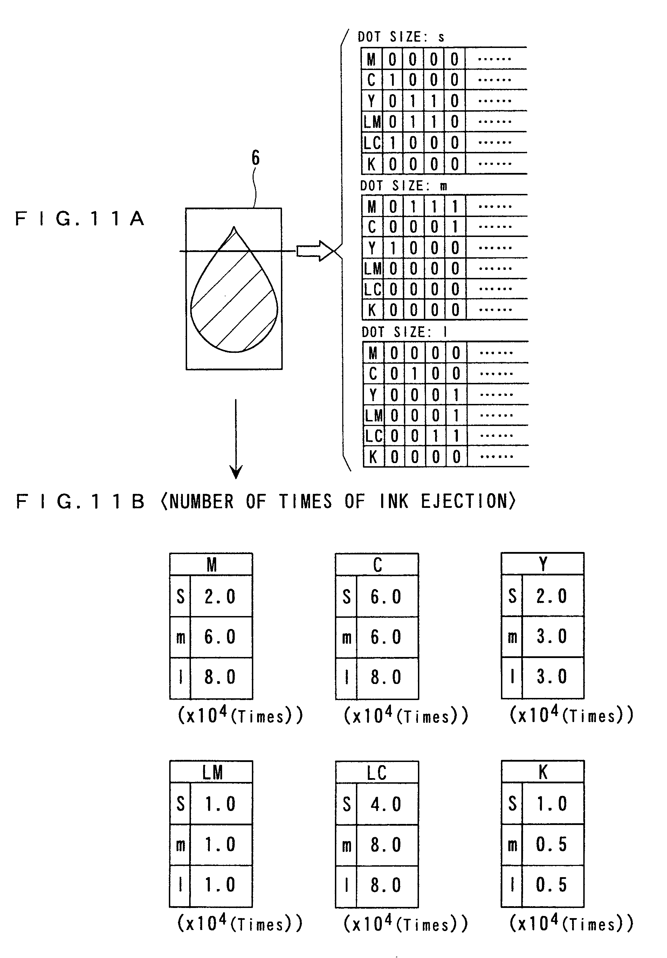

Next, a second embodiment of the invention will be described with reference to FIGS. 11A to 13B. This embodiment is distinguished from the first embodiment only in the printing cost-calculating method, and hence in the following, only a printing cost-calculating method of this embodiment will be described, but the description of the other elements including the hardware configuration will be omitted.

First, the printing company 2 acquires data of the digital image 6 transmitted from the client 3 and executes color conversion according to a predetermined LUT (look-up table). More specifically, the digital image 6 expressed by an additive color process using R (red), G (green), and B (blue) is converted to an image expressed by a subtractive color mixture using M (magenta), C (cyan), Y (yellow), K (black), (and the like), which can be outputted by the printing apparatus 4 (ink jet printer), based on the predetermined correlation between the "additive color mixture" and the "subtractive color mixture". The printing apparatus 4 is provided with six colors of ink, i.e. M, C, Y, LM (light magenta), LC (light cyan) and K (see FIG. 10), as described above, and hence in the present example, the digital image 6 is color converted to an image having the six colors. In the color conversion, it is preferred that RGB values of the additive color mixture are changed, as required, according to the color output algorithm. This method makes it possible to take full advantage of characteristics of the printing apparatus 4 in printing operation to thereby prepare beautiful printed matter.

Then, the digital image (subtractive color mixture digital image) 6 subjected to the color conversion is converted to print data in a selected one of various methods. These methods include a method of rasterizing the digital image, a method of converting the same to microwaves, and a method of converting the same to ESC/P commands. In the present embodiment, it is assumed that the rasterizing method is employed.

In general, in a normal paper printer of laser-scanning type or in a raster output device called an image setter, image data generated by a DTP system is developed into a bit map by a RIP (Raster Image Processor) and then output. In the present embodiment, the RIP is used to convert the digital image 6 to raster data.

It should be noted that before processing by the RIP, raster data (separation data) represented in a subtractive color mixture may be generated by an application or a PostScript printer driver. Further, although the GDI (Graphical Device Interface) mode of the Windows (registered trademark of Microsoft) and PDF (Portable Document Format) data are based on RGB data, the GDI data and the PDF data may be directly processed by a RIP compatible with the PostScript (registered trademark of Adobe Systems, Inc.) 3.

The data converted to print data (raster data) by processing using the RIP as described above is converted into numerical values corresponding respectively to the six colors, and at the same time dot sizes of the data are defined. Needless to say, when the resolution of the data is changed, the dot sizes are defined differently (for example, when an image has a resolution of 1220 (dpi), the proportion of dots having small sizes is higher than when the image has a resolution of 720 (dpi). Based on the data converted to the print data, the numbers of times of ink ejection are calculated on a color-by-color basis and on a dot size-by-dot size basis. Further, color-specific amounts of inks to be consumed are calculated based on corresponding ones of the determined numbers of times of ink ejection, and then the value of the calculated amount of each color ink to be consumed is multiplied by the price of a unit amount (unit cost) of the ink to thereby calculate a printing cost.

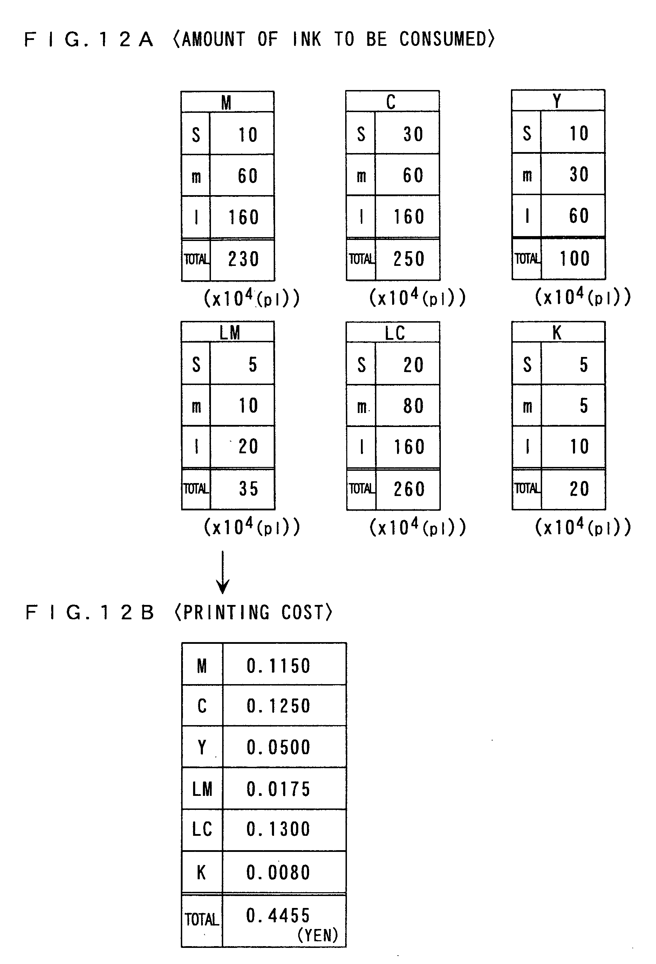

In the following, the process of calculating the printing cost from the data converted to the print data is described with reference to FIGS. 11A, 11B and 12A, 12B. As shown in FIG. 11A, raster data is generated according to a resolution specified by the user (in the present embodiment, it is assumed that a "color illustration" is specified as the image type by the user, and the specified resolution is 720 (dpi)). The raster data is converted into numerical values on a color-by-color basis and on a dot size-by-dot size basis, part of which is illustrated in FIG. 11A such that it can be understood easily. Although in the present embodiment, the dot sizes are classified into three types, i.e. an "s (small)" type, an "m (medium)" type and an "l (large)" type, it goes without saying that the dot sizes can be classified into a larger number of types.

Subsequently, as shown in FIG. 11B, the numbers of times of ink ejection are calculated based on the above data on a color-by-color basis and on a dot size-by-dot size basis. In the present embodiment, since the specified resolution is 720 (dpi), the maximum number of times of ejection of each color ink is 720 x 720 = 518400 (times). Therefore, the total of the numbers of times of ink ejection for the dot sizes s, m and l of each color ink is set such that it does not exceed 518,400 (times). For example, in the case of the M color, the number of times of ink ejection for the dot size s is 20,000 (2.0 x 10⁴) (times), that for the dot size m is 60,000 (6.0 x 10⁴) (times), and that for the dot size l is 80,000 (8.0 x 10⁴) (times), and hence the total number of times of ink ejection for the M color ink is 160,000 (16.0 x 10⁴) (times).

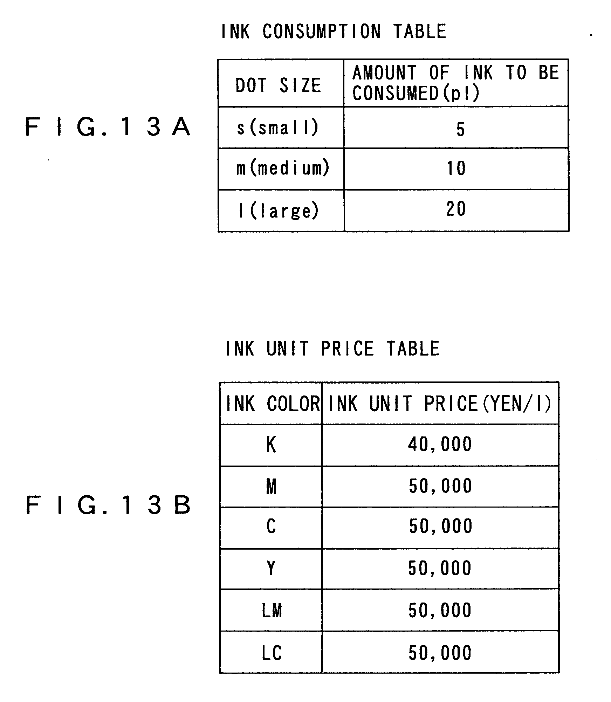

Then, color-specific amounts of inks to be consumed are calculated. Each amount of an ink to be consumed is calculated according to a FIG. 13A "ink consumption table (coloring material consumption table)" which associates dot sizes and respective amounts of inks to be consumed for the respective dots. As shown in FIG. 12A, each of the above calculated numbers of times of ink ejection for the respective dot sizes of each color is multiplied by an amount of the ink to be consumed corresponding thereto, and then the three values obtained for each color are added up to determine the amount of each color ink to be consumed. For example, in the case of the M color, the amount of the M color ink to be consumed for the dot size s is (2.0 x 10⁴) x 5 = 10 x 10⁴ (pl), that for the dot size m is (6.0 x 10⁴) x 10 = 60 x 10⁴ (pl), and that for the dot size l (8.0 x 10⁴) x 20 = 160 x 10⁴ (pl), and hence the total amount of the M color ink to be consumed is 230 x 10⁴ (pl).

Then, printing costs are calculated on a color-by-color basis. Each printing cost is calculated based on a FIG. 13B "ink unit price table" which associates ink colors with respective ink unit prices. As shown in FIG. 12B, each of the above calculated color-specific amounts of inks to be consumed is multiplied by an ink unit price corresponding thereto, and then the three values obtained for each color are added up to obtain the printing cost for the corresponding color ink. For example, in the case of the M color, the printing cost is calculated as (230 x 10⁴ (pl)) x 50000 (yen/l) = 0.115 (yen).

Further, printing costs associated with the other five color inks are calculated similarly, and then the obtained printing costs are added to the above printing cost associated with the M color ink, whereby a printing cost per image can be determined. In the illustrated example, the printing cost per image (total printing cost of (a copy of) the present image) amounts to 0.4455 (yen).

Although in the above embodiment, the "ink unit price table" which associates ink colors and respective ink unit prices is looked up to calculate a printing cost for each color by multiplying the corresponding ink unit price obtained from the table by an amount of the corresponding ink to be consumed, this is not limitative, but the color-specific printing costs may be calculated by using (looking up) an "ink price table (coloring material price table)" associating amounts of inks to be consumed and respective color-specific ink prices in those amounts. According to this method, simply by looking up the table, it is possible to calculate the color-specific printing costs without using any calculation programs.

Further, as the printing apparatus 4, it is preferable to use an ink jet printer of a (piezoelectric) type which ejects ink by deformation of a piezoelectric element. The piezoelectric ink jet printer utilizes the characteristic of a piezoelectric element which is deformed by application of a voltage, so that it is possible to eject ink droplets straightforward with accuracy as well as to reduce the amount of ink ejected for each ejecting operation. In other words, each dot can be reduced in size, which enables printing with high accuracy and high resolution. In addition, since the amount of ink ejected for each ejecting operation can be reduced, it is possible to increase the number of times (or frequency) of ink ejection which can be performed within a predetermined time period. Therefore, by increasing the moving speed of the print head, it is possible to carry out highspeed printing insofar as the resolution is remains the same, while if the above frequency is increased with the speed of motion of the print head maintained at a conventional speed, it is possible to increase the DPI value in the direction of motion the print head.

Although in this embodiment, a digital image is converted to print data, and then the amount of ink to be consumed is calculated from the number of dots calculated on a dot size-by dot size basis based on the print data (see FIGS. 11A, 11B and 12A, 12B), this is not limitative, but the amount of ink to be consumed may be obtained by any other suitable method, e.g. by measuring the amount of ink ejected from the ink jet head (i.e. by counting the number of times of ink ejection) or by measuring the weight of a cartridge which supplies ink to the ink jet head.

In the first and second embodiments described above, when "photograph" is specified as an image type, settings may be changed not only to increase the resolution, but also to improve image quality. More specifically, if LM color ink having a fraction (a quarter in general) of the density of M color ink is ejected onto identical portions of a sheet several times, varied tones of M color can be expressed. Further, in this case, if the amount of ink for ejection is reduced to half, and lateral resolution is doubled, the breadth of color expression can be increased. Moreover, the dot size is reduced, which makes dots (halftone dots) inconspicuous.

Although in the illustrated example of the above embodiments, the options displayed as candidate "label sheets" are all transparent and colorless sheets, color sheets may be provided as options. In this case, e.g. when printing is to be performed on a Y color sheet, the printing cost is preferably calculated after deduction of Y color ink of an amount corresponding to the density of the Y color of the sheet from the amount of Y color ink required for the printing. Further, in this case, it is preferred that portions of the digital image to be expressed in white are printed by using W (white) color ink. This method allows printing to be carried out on a color sheet (print medium), thereby increasing the variety of printed matter. Further, depending on composition of colors of a digital image, if an image requiring the use of much C color ink, such as a picture of a ship floating on the sea, is to be printed, the use of a C color sheet will enable low-cost printing.

It should be noted that although in the illustrated examples of the printing cost-calculating methods of the above embodiments, the printing cost is calculated as a mere running cost containing no profit for the printing company 2, it is preferred that when this printing cost is presented to the user as an estimate, the printing cost contains a profit for the printing company 2.

Although in the illustrated example described hereinabove, the client 3 does not execute the "estimate check & formal order" process until the "reply E-mail" from the printing company 2 arrives after execution of the "estimation request & provisional order" process, this is not limitative, but the client 3 may be allowed to carry out the operations for the "estimate check" alone immediately after execution of the "estimation request & provisional order" process. More specifically, several sample prints different in pattern may be automatically prepared based on the digital image transmitted from the client 3, and then estimates corresponding to the respective sample prints may be automatically calculated. According to this method, it is possible to notify the client 3 of the estimates quickly. Further, the processing can be carried out automatically without requiring any labor of the printing company 2, which contributes to reduction of labor costs.

Further, since the total cost of coloring materials required for preparation of printed matter 5 can vary depending on various conditions, it is preferred that the unit cost of each coloring material is variable, i.e. provided in a floating manner. This method makes it possible to calculate the printing cost of the printed matter 5 more accurately according to a change in the unit costs of the coloring materials depending on various conditions. Further, in this case, in view of the fact that the sample prints are automatically prepared, the client 3 may be inhibited from specifying "printing cost" as a printing condition. According to this method, it is possible to readily present sample prints and estimates according to the aforementioned method of presenting sample prints and the printing cost-calculating method. On the other hand, when the client 3 is allowed to specify "printing cost" as a printing condition, it is preferred that after determination as to whether or not a printing cost calculated by the predetermined calculation method is equal to or lower than the printing cost specified by the client 3, if the former exceeds the latter, sample prints and cost estimates are presented, after reducing printing density and resolution.

Further, the program may be configured such that when none of the sample prints and the corresponding estimates satisfy the needs of the client 3, the client 3 is allowed to correct (modify) the settings of the printing conditions instead of carrying out the operations for the "estimation request & provisionary order" (see FIGS. 2 and 3) from the beginning again, to thereby make an "estimation request". According to this method, since the printing conditions are modified based on the contents of an estimate once presented, the printing company 2 can provide an estimate closer to the printing cost desired by the client 3. Further, the client 3 is not required to re-enter the client information or transmit the digital image again, which enables the client 3 to make an estimation request without any need to carry out complicated operations.

In this case, the system may be configured such that the display 11 is switched to the "details-setting screen" shown in FIG. 10, and the client 3 can change numerical values within double-square boxes for modification of the printing conditions. For example, when the client 3 wants to change the densities of the respective colors, values designated by (a) are changed. When the client 3 wants to change the size of the image portion on the sheet, values designated by (b) are changed. Further, when the clients 3 wants to change the density of the entire image, a value designated by (c) is changed, while when the clients 3 wants to change the resolution, a value designated by (d) is changed. In order to change the proportion of each color, the position of each boundary 1 in a pie chart (e) showing the proportion of each color may be changed instead of changing the values (a).

Although in the above embodiment, each of the "estimates" presented to the client 3 naturally contains a profit for the printing company 2, it may be provided as a mere running cost containing no profit for the printing company 2.

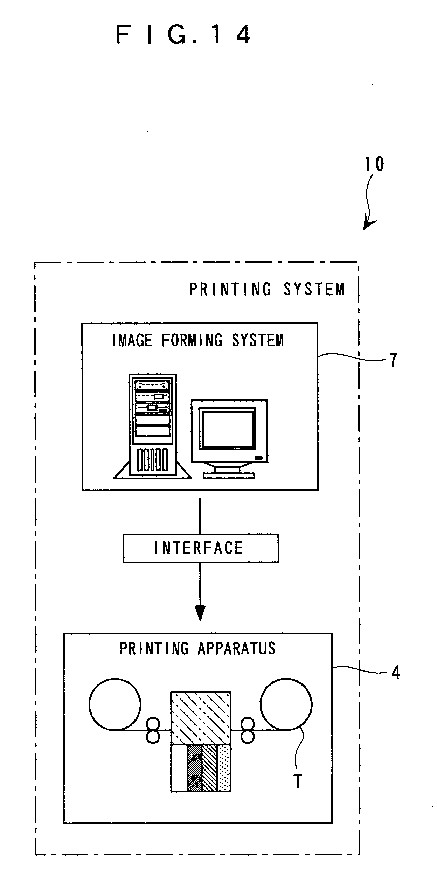

Further, in place of the system (printed matter-issuing system) where the client 3 and the printing company 2 are connected to each other via the network as shown in FIG. 1, a system (printing system) may be formed in which an image forming system 7 for forming digital images and a printing apparatus 4 having the function of calculating a printing cost are connected to each other simply via an interface as in a third embodiment of the invention shown in FIG. 14. More specifically, the image forming system 7 in FIG. 14 corresponds to the client 3 in FIG. 1 who transmits a digital image, and the interface in FIG. 14 corresponds to the network NW in FIG. 1 for connection between the client 3 and the printing company 2. Further, the printing apparatus 4 in FIG. 14 corresponds to the printing company 2 (including the server SV and the printing apparatus 4) in FIG. 1, which calculates a printing cost and prepares printed matter 5. According to the present system, the printing company 2 can accurately estimate costs of consumables required for preparation of the printed matter 5, simply by constructing a simple network in the company itself.

In the above embodiment, the interface can be implemented by communication means based on cable transmission standards, such as an RS-232C interface, a USB interface, an IEEE1394 interface or a Centronics interface. Therefore, it is preferred that the printing apparatus 4 is compatible with these interface standards (including ones compliant with the standards). According to this system, the printing apparatus 4 is compatible with both serial data communication means (RS-232C, USB, IEEE1394, etc.) and parallel data communication means (Centronics, etc.). Needles to say, it is also possible to utilize wireless transmission means as an interface.

Although in the above embodiment, a cost (unit price) of each print copy is provided as a result of estimation, the total cost (total price) of a number of print copies specified by the client 3 may be presented.

Further, although the resolution of printed matter 5 is determined by a specified image type (photograph or illustration), the resolution may be specified as one of the printing conditions by the client 3. This method makes it possible to prepare printed matter which meets the needs of the client 3 more favorably.

Further, although in one of the steps of presenting a sample print, the entire print image is reduced in size to 80 % of the specified size, the system may be configured such that instead of reducing the entire print image, only an illustrated portion (picture portion or photograph portion) I (see FIG. 9) can be reduced or expanded. According to this method, when the consumption of coloring materials is much influenced by an illustration portion, it is possible to adjust the printing cost efficiently by changing the size of the portion. Further, the client 3 may be also allowed to specify the size or proportion of the illustrated portion as one of the printing conditions. This method makes it possible to prepare printed matter which meets the needs of the client 3 more favorably.

Although in the above embodiments, the description has been given based on the example in which the printing cost-calculating method according to the invention is applied to the printed matter-issuing system 1, this is not limitative, but a storage medium (CD-ROM, MO, or the like) or printer driver software storing the algorithms of the printing cost-calculating method may be made use of. Alternatively, it is possible to store the algorithms in a storage medium (ROM) and use the storage medium as a printing cost-calculating apparatus incorporated in a personal computer or the like.

Ink for use in the printing apparatus 4 implemented by the ink jet printer in the above embodiments may be dye ink, pigment-based ink, sublimable ink, oil-based ink, UV ink or conductive water-color ink. Alternatively, special coloring material (ejectable material), such as stealth ink or organic EL, which does not form an image directly, may be used. When an electrophotographic printer is used as the printing apparatus 4, toner for use therein may be powder toner or liquid toner.

It is further understood by those skilled in the art that the foregoing is a preferred embodiment of the invention, and that various changes and modifications may be made without departing from the spirit and scope thereof.

## Claims

1. A printing cost-calculating method for calculating a printing cost required for preparing printed matter by using at least one coloring material, based on a digital image represented by discrete numerical data,
the method comprising the steps of:
calculating an amount of the at least one coloring material to be consumed for preparation of the printed matter, based on the digital image; and
calculating the printing cost based on the amount of the at least one coloring material calculated in the step of calculating the amount of the at least one coloring material to be consumed.

2. A printing cost-calculating method according to claim 1, wherein the step of calculating the amount of the at least one coloring material to be consumed includes carrying out pseudo-gradation processing on the digital image by a dither method, and calculating gradation-specific amounts of the at least one coloring material.

3. A printing cost-calculating method according to claim 2, wherein the gradation-specific amounts of the at least one coloring material are calculated based on numerical values which represent respective gradations.

4. A printing cost-calculating method according to claim 1, wherein the step of calculating the amount of the at least one coloring material to be consumed includes calculating color-specific amounts of the at least one coloring material for respective colors thereof, and
the step of calculating the printing cost includes calculating the printing cost based on the color-specific amounts of the at least one coloring material calculated for the respective colors thereof and prices of unit amounts of the at least one coloring material set for the respective colors.

5. A printing cost-calculating method according to claim 1, further comprising the step of specifying the number of copies of the printed matter, and
wherein the step of calculating the printing cost includes calculating the printing cost according to the number of copies specified in the step of specifying the number of copies of the printed matter.

6. A printing cost-calculating method according to claim 5, wherein the step of calculating the printing cost includes the steps of calculating a cost per copy of the printed matter, and calculating a total cost of the copies of the printed matter the number of which is specified in the step of specifying the number of copies.

7. A printing cost-calculating method according to claim 1, further comprising the step of specifying a resolution of the printed matter, and
wherein the step of calculating the printing cost includes calculating the printing cost according to the resolution specified in the step of specifying the resolution.

8. A printing cost-calculating method according to claim 1, wherein the at least one coloring material includes at least one color of ink or at least one color of toner.

9. A printing cost-calculating method according to claim 1, wherein the step of calculating the amount of the at least one coloring material to be consumed includes calculating the amount of the at least one coloring material to be consumed, based on the number of dots to be printed for preparation of the printed matter.

10. A printing cost-calculating method according to claim 9, further comprising the step of carrying out color conversion of the digital image to a subtractive color mixture digital image which is expressed by a subtractive process, when the digital image is an image expressed by an additive process, and
wherein the step of calculating the amount of the at least one coloring material to be consumed includes calculating the amount of the at least one coloring material to be consumed based on the subtractive color mixture digital image formed by the color conversion in the step of carrying out color conversion.

11. A printing cost-calculating method according to claim 9, wherein the step of calculating the amount of the at least one coloring material to be consumed includes calculating the amount of the at least one coloring material to be consumed, based on amounts of the at least one coloring material calculated with respect to respective different dot sizes.

12. A printing cost-calculating method according to claim 11, wherein the step of calculating the amount of at least one coloring material to be consumed includes calculating the amount of the at least one coloring material, by looking up a coloring material consumption table associating amounts of the at least one coloring material to be consumed per dot with respective dot sizes.

13. A printing cost-calculating method according to claim 12, further comprising the step of specifying a resolution of the printed matter, and
wherein the step of calculating the amount of the at least one coloring material to be consumed includes calculating the amounts of the at least one coloring material with respect to the respective different dot sizes according to the resolution specified in the step of specifying a resolution.

14. A printing cost-calculating method according to claim 9, wherein the step of calculating the printing cost includes calculating the printing cost by looking up a coloring material price table associating amounts of the at least one coloring material to be consumed with respective prices thereof.

15. A printing cost-calculating method according to claim 9, wherein when the digital image is expressed by a plurality of colors, the at least one coloring material comprises a plurality of coloring materials having respective different colors, and
wherein the step of calculating the amount of the at least one coloring material to be consumed includes calculating respective amounts of the different colors of the coloring materials to be consumed, and
wherein the step of calculating the printing cost includes calculating the printing cost by looking up a color-specific coloring material prices table associating respective amounts of different colors of coloring materials with respective prices thereof.

16. A printing cost-calculating method according to claim 9, wherein when the digital image is expressed by a plurality of colors, the at least one coloring material comprises a plurality of coloring materials having respective different colors, and
wherein the step of calculating the amount of the at least one coloring material to be consumed includes calculating respective amounts of the different colors of the coloring materials to be consumed, and
wherein the step of calculating the printing cost includes calculating the printing cost by looking up a color-specific coloring material unit prices table associating unit amounts of different coloring materials with respective prices thereof.

17. A printing cost-calculating method according to claim 14, wherein the prices are variable.

18. A printing cost-calculating apparatus for calculating a printing cost required for preparing printed matter by using at least one coloring material, based on a digital image represented by discrete numerical data,
the printing cost-calculating apparatus comprising:
first calculation means for calculating an amount of the at least one coloring material to be consumed for preparation of the printed matter, based on the digital image; and
second calculation means for calculating the printing cost based on the amount of the at least one coloring material calculated by said first calculation means.

19. A printing cost-calculating apparatus according to claim 18, further comprising pseudo gradation means for carrying out pseudo-gradation processing on the digital image by a dither method, and
wherein said first calculation means includes gradation-specific amounts calculation means for calculating gradation-specific amounts of the at least one coloring material to be consumed.

20. A print cost-calculating apparatus according to claim 19, wherein said gradation-specific amounts calculation means calculates the gradation-specific amounts of the at least one coloring material, based on numerical values which express respective gradations set by said pseudo gradation means.

21. A printing cost-calculating apparatus according to claim 18, wherein said first calculation means includes means for calculating color-specific amounts of the at least one coloring material for respective colors thereof, and
said second calculation means includes means for calculating the printing cost based on the color-specific amounts of the at least one coloring material calculated for the respective colors thereof and prices of color-specific unit amounts of the at least one coloring material set for the respective colors.

22. A printing cost-calculating apparatus according to claim 18, wherein said first calculation means calculates the amount of at least one coloring material to be consumed based on the number of dots to be printed for preparation of the printed matter.

23. A printing cost-calculating apparatus according to claim 18, further comprising color conversion means for carrying out color conversion of the digital image to a subtractive color mixture digital image which is expressed by a subtractive process, when the digital image is an image expressed by an additive process, and
wherein said first calculation means includes means for calculating the amount of the at least one coloring material to be consumed, based on the subtractive color mixture digital image formed by the color conversion by said color conversion means.

24. A printing cost-calculating apparatus according to claim 18, wherein said first calculation means includes means for calculating the amount of the at least one coloring material to be consumed, based on amounts of the at least one coloring material calculated with respect to respective different dot sizes.

25. A printing cost-calculating apparatus according to claim 24, further comprising storage means for storing a coloring material consumption table associating amounts of the at least one coloring material to be consumed per dot with respective dot sizes, and
wherein said first calculation means includes means for calculating the amount of at least one coloring material to be consumed, by looking up the coloring material consumption table stored in said storage means.

26. A printing cost-calculating apparatus according to claim 25, further comprising resolution-specifying means for specifying a resolution of the printed matter, and
wherein said first calculation means includes means for calculating the amounts of the at least one coloring material with respect to the respective different dot sizes according to the resolution specified by said resolution-specifying means.

27. A printing cost-calculating apparatus according to claim 22, wherein when the digital image is expressed in a plurality of colors, the at least one coloring material comprises a plurality of coloring materials having respective different colors, and
wherein said first calculation means includes means for calculating respective amounts of the different colors of the coloring materials to be consumed, and
wherein said second calculation means includes means for calculating the printing cost based on the respective amounts of the different colors of the coloring materials to be consumed.

28. A printing cost-calculating apparatus according to claim 22, further comprising storage means for storing a coloring material price table associating amounts of the at least one coloring material to be consumed with respective prices thereof, and
wherein said second calculation means includes means for calculating the printing cost by looking up the coloring material price table stored in said storage means.

29. A printing cost-calculating apparatus according to claim 27, further comprising storage means for storing a color-specific coloring material prices table associating respective amounts of different colors of coloring materials with respective prices thereof, and
wherein said second calculation means includes means for calculating the printing cost by looking up the color-specific coloring material prices table stored by said storage means.

30. A printing cost-calculating apparatus according to claim 28, wherein the prices are variable.

31. A printer driver capable of calculating a printing cost required for preparing printed matter by using at least one coloring material, based on a digital image represented by discrete numerical data,
the printer driver comprising:
first calculation means for calculating an amount of the at least one coloring material to be consumed for preparation of the printed matter, based on the digital image; and
second calculation means for calculating the printing cost based on the amount of the at least one coloring material calculated by said first calculation means, and
wherein said first calculation means calculates the amount of the at least one coloring material to be consumed, based on the number of dots to be printed for preparation of the printed matter.

32. A printing apparatus capable of calculating a printing cost required for preparing printed matter by using at least one coloring material, based on a digital image represented by discrete numerical data,
the printing apparatus comprising:
first calculation means for calculating an amount of the at least one coloring material to be consumed for preparation of the printed matter, based on the digital image;
second calculation means for calculating the printing cost based on the amount of the at least one coloring material calculated by said first calculation means; and
printed matter-preparing means for preparing the printed matter by using the at least one coloring material, based on the digital image.

33. A printing apparatus according to claim 32, wherein said first calculation means calculates the amount of the at least one coloring material to be consumed based on the number of dots to be printed for preparation of the printed matter.

34. A printing apparatus according to claim 32, wherein said printed matter-preparing means includes means for preparing the printed matter by an ink jet printing method.

35. A printing apparatus according to claim 32, wherein said printed matter-preparing means includes means for preparing the printed matter by an electrophotographic printing method.

36. A printing system capable of calculating a printing cost required for preparing printed matter by using at least one coloring material, based on a digital image represented by discrete numerical data,
the printing system comprising:
a printing apparatus including:
first calculation means for calculating an amount of the at least one coloring material to be consumed for preparation of the printed matter, based on the digital image, and
second calculation means for calculating the printing cost based on the amount of the at least one coloring material calculated by said first calculation means, and
printed matter-preparing means for preparing the printed matter by using the at least one coloring material, based on the digital image; and
digital image-forming means for forming the digital image.

37. A printing system according to claim 36, wherein said digital image-forming means includes digital data-generating means for generating digital data representing the digital image, and said printed matter-preparing means prepares the printed matter based on the digital image.

38. A printing system according to claim 37, wherein said printing apparatus is capable of receiving the digital data generated by said digital data-generating means, via an interface.

39. A printing system according to claim 38, wherein the interface enables communications via a predetermined network.

40. A printing system according to claim 39, wherein the network includes a predetermined internet or a LAN.

41. A printing cost-calculating system for calculating a printing cost required for preparing printed matter by using at least one coloring material, based on a digital image represented by discrete numerical data,
the printing cost-calculating system comprising:
first calculation means for calculating an amount of the at least one coloring material to be consumed for preparation of the printed matter, based on the digital image; and
second calculation means for calculating the printing cost based on the amount of the at least one coloring material calculated by said first calculation means; and
wherein said first calculation means includes means for calculating amounts of the at least one coloring material for respective colors thereof,
wherein said second calculation means includes means for calculating the printing cost based on the amounts of the at least one coloring material calculated for the respective colors thereof, and prices of unit amounts of the at least one coloring material set for the respective colors, and
wherein the prices are variable.

42. A printing cost-calculating system for calculating a printing cost required for preparing printed matter by using at least one coloring material, based on a digital image represented by discrete numerical data,
the printing cost-calculating system comprising:
first calculation means for calculating an amount of the at least one coloring material to be consumed for preparation of the printed matter, based on the digital image;
second calculation means for calculating the printing cost based on the amount of the at least one coloring material to be consumed calculated by said first calculation means; and
network means capable of automatically responding to an access from outside.

43. A printing cost-calculating system according to claim 42, wherein said network means includes a predetermined internet or a LAN.

44. A printing cost-calculating system for calculating a printing cost required for preparing printed matter by using at least one coloring material, based on a digital image represented by discrete numerical data,
the printing cost-calculating system comprising:
first calculation means for calculating an amount of the at least one coloring material to be consumed for preparation of the printed matter, based on the digital image;
second calculation means for calculating the printing cost based on the amount of the at least one coloring material to be consumed calculated by said first calculation means;
digital image-acquiring means for acquiring the digital image from a client requesting calculation of the printing cost; and
printing condition-acquiring means for acquiring printing conditions under which the printed matter should be prepared based on the digital image acquired by said digital image-acquiring means, from the client and
wherein said second calculation means calculates the printing cost according to the printing conditions acquired by said printing condition-acquiring means.

45. A printing cost-calculating system according to claim 43, further comprising printing cost-presenting means for presenting the printing cost calculated by said second calculation means to the client.

46. A printed matter-issuing system capable of calculating a printing cost required for preparing printed matter by using at least one coloring material, based on a digital image represented by discrete numerical data, comprising:
a printing cost-calculating system including:
first calculation means for calculating an amount of the at least one coloring material to be consumed for preparation of the printed matter, based on the digital image,
second calculation means for calculating the printing cost based on the amount of the at least one coloring material to be consumed calculated by said first calculation means,
digital image-acquiring means for acquiring the digital image from a client requesting calculation of the printing cost,
printing condition-acquiring means for acquiring printing conditions under which the printed matter should be prepared based on the digital image acquired by said digital image-acquiring means, from the client, and
printing cost-presenting means for presenting the printing cost calculated by said second calculation means to the client,
wherein said second calculation means calculates the printing cost according to the printing conditions acquired by said printing condition-acquiring means; and
printed matter-issuing means for issuing the printed matter prepared based on the digital image acquired by said digital image-acquiring means, under the printing conditions acquired by said printing condition-acquiring means, to the client.

47. A printed matter-issuing system according to claim 46, further comprising sample print-presenting means for presenting a sample print of the printed matter prepared based on the printing conditions acquired by said printing condition-acquiring means to the client, before issuing of the printed matter by said printed matter-issuing means.

48. A printed matter-issuing system according to claim 47, further comprising printing cost-presenting means for presenting the printing cost calculated by said second calculation means in association with the sample print prepared by said sample print-presenting means.

49. A printed matter-issuing system according to claim 46, wherein the printing conditions include at least one of the number of copies of the printed matter to be prepared, a sheet type of the printed matter, a size of the printed matter, a desired printing cost of the printed matter, a desired delivery date for the printed matter, respective colors of components forming a print image to be printed for preparation of the printed matter based on the digital image, a proportion or size of the print image with respect to the printed matter, densities of the respective components, information as to whether a picture or a photograph is contained in each of the components, and a proportion of the picture or the photograph with respect to each of the components or a size of the picture or the photograph.

50. A printed matter-issuing system according to claim 46, further comprising client information-acquiring means for acquiring information of the client.

51. A printed matter-issuing system according to claim 46, wherein the printing cost calculated by said second calculation means is a printing fee charged on the client taking all costs into account.

52. A printed matter-issuing system according to claim 46, wherein the printed matter is prepared by an ink jet printing method.
